(19) **Europäisches Patentamt** / **European Patent Office** / **Office européen des brevets**

(11) **EP 4 482 085 B1**

(12) **EUROPEAN PATENT SPECIFICATION**

(45) Date of publication and mention
of the grant of the patent:
**17.12.2025 Bulletin 2025/51**

(21) Application number: **23305986.4**

(22) Date of filing: **21.06.2023**

(51) International Patent Classification (IPC):
*H04L 9/40* *(2022.01)*    *G06F 21/73* *(2013.01)*
*G06F 21/77* *(2013.01)*    *H04L 9/08* *(2006.01)*
*H04W 12/30* *(2021.01)*    *H04W 12/48* *(2021.01)*

(52) Cooperative Patent Classification (CPC):
**H04L 63/0853; G06F 21/73; G06F 21/77;**
**H04L 9/0897; H04W 12/35; H04W 12/48**

(54) **METHOD FOR STORING PROTECTED DATA IN A SECURE CHIP IN AN UNSECURE ENVIRONMENT**

VERFAHREN ZUM SPEICHERN GESCHÜTZTER DATEN IN EINEM GESICHERTEN CHIP IN EINER UNSICHEREN UMGEBUNG

PROCÉDÉ DE STOCKAGE DE DONNÉES PROTÉGÉES DANS UNE PUCE SÉCURISÉE DANS UN ENVIRONNEMENT NON SÉCURISÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.12.2024 Bulletin 2024/52**

(73) Proprietor: **IDEMIA France**
**92400 Courbevoie (FR)**

(72) Inventors:
• **DOS SANTOS, Elder**
**92400 Courbevoie (FR)**
• **GIVORD, Sylvain**
**92400 Courbevoie (FR)**
• **WRATNY, Andrzej**
**92400 Courbevoie (FR)**

• **KARPINSKI, Pawel**
**92400 Courbevoie (FR)**

(74) Representative: **Idemia**
**Service IP / IST**
**2, place Samuel de Champlain**
**92400 Courbevoie (FR)**

(56) References cited:
**EP-A1- 2 077 517**    **EP-A1- 3 557 895**

• **UNKNOWN V3: "GSM Association Non-confidential Official Document SGP.21 -RSP Architecture", 28 March 2022 (2022-03-28), XP093005188, Retrieved from the Internet <URL:https://www.gsma.com/esim/wp-content/uploads/2022/03/SGP.21-v3.0.pdf> [retrieved on 20221206]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

**FIELD OF THE INVENTION**

The present invention is aimed at storing protected data in a secure chip in an unsecure environment. The present invention more particularly relates to the in-factory loading and storing of sets of protected data into secure chips. It applies, in particular, to the field of mobile network devices (cell phones, tablets, portable computers, security controllers, medical devices, etc.) and particularly to in-factory loading and storing of profiles into embedded Universal Integrated Circuit Cards (eUICCs), i.e., when the secure chips are eUICCs and the sets of protected data are profiles.

The invention is not limited to this particular application and can be applied with many other types of secured chips, e.g., integrated UICCs (iUICCs), SD (Secure Digital) cards, miniSD cards, microSD cards, smart cards, integrated secure chips (iSE), software secure elements, secure enclaves, etc.

**TECHNOLOGICAL BACKGROUND**

eUICC refers to the architectural standards published by the GSM Association (GSMA) or implementations of those standards for eSIM, a device used to securely store one or more SIM card profiles. Profiles contain the unique identifiers and cryptographic keys used by mobile network service providers to uniquely identify and securely connect to mobile network devices. More particularly, a profile is a combination of a file structure, data and applications to be provisioned onto, or present on, an eUICC and which allows, when enabled, to access to a specific mobile network infrastructure.

Each implementation of eUICC includes software code, a processor to emulate the software, non-volatile memory used to store the unique identifiers and cryptographic keys that are part of a SIM profile, and a bus interface to communicate with the mobile device. eUICC standards specify that only one eUICC security controller (ECASD) may be implemented in an eSIM, but the eSIM may store multiple SIM profiles.

We shall strive more particularly here below in this document to describe the problems and issues existing in the aforesaid particular case of in-factory storing of profiles in eUICCs. However, and already mentioned, the invention is not limited to this particular application.

An eUICC is able to store at least two profiles, and can activate either a single profile at a time or several (it depends on the type of standard and version that is implemented and supported by eUICC). Enabled profile is the state of a profile when its files and/or applications are selectable over the UICC-Terminal interface. Fall-Back Attribute is an attribute allocated to a profile which, when set, identifies the profile to be enabled by the Fall-Back Mechanism or by the execution of the Disable Profile function on another profile. Only one profile on the eUICC can have the Fall-Back attribute set at a time.

The IFPP (In Factory Profile Provisioning), intends to allow factories to load a profile into a eUICC. However, it is necessary to prevent to store a profile in multiple eUICCs. It is known to bind the profile (identified by the ICCID, which stands for Integrated Circuit Card IDentifier) to a specific eUICC (identified with its EID). Because this binding is a secure mechanism, it has to be done in a secure environment, i.e., commonly in SM-DP (Subscription Manager Data Preparation) as described into standard GSMA SGP.02 Remote provisioning Architecture for Embedded UICC - Technical specification - version 4.3 (subsequently referenced SGP.02 for the M2M mode) or in SM-DP+ (Subscription Manager Data Preparation enhanced) as described into GSMA SGP.22 RSP technical specification - version 3.0 (subsequently referenced SGP.22 for the Consumer mode) or in SM-DPf (Subscription Manager Data Preparation factory) as described into standard GSMA SGP.41 eSIM IFPP Architecture and requirement Draft 11. For the following, into the text, terms SM-DP+ or SM-DP will be used indifferently but they have to be understood and applicable also to the other type of subscriber manager data preparation (i.e., SM-DP, SM-DP+ or SM-DPf). The SM-DP+ is a protected online server, and the binding requires from the SM-DP+ a knowledge of the targeted eUICC (the EID).For IFPP, the binding has to be done in the factory. However, the factory is a zero-trust environment. Furthermore, the binding would require exchanges between the factory and the SM-DP+ which may introduce a significant latency and gives inflexible logistics constraints in the factory (if an eUICC is lost/destroyed, its bound profile is lost). Furthermore, the factory may not be able to connect to the SM-DP+.

Document EP3557895 A1 describes a method and apparatus for managing a profile of a terminal in a wireless communication system.

Document EP2077517 A1 describes a system implementing delegation of access conditions between portable tokens.

Document "GSM Association Non-confidential Official Document SGP.21 - RSP Architecture », 28 March 2022, provides an architecture approach as a proposed solution for the remote SIM provisioning of eSIM devices across all markets.

## SUMMARY OF THE INVENTION

The present invention aims to remedy all or part of the disadvantages of the prior art.

To this end the present invention is aimed at a method for storing series of protected data in secure chips in an unsecure environment as disclosed in claim 1.

Thanks to these provisions, binding of a series of protected data is possible in a zero-trust environment, because it is performed by a first secure chip and checked by a second secure chip. If the second secure chip determines that the token has not been issued by the first secure chip, the second series of protected data is discarded. The present invention hence allows a late binding, in a zero-trust environment, because the first secure chip is a Secured Entity. It has to be noted that the second secure chip may implement the same steps as the first secure chip to allow a third chip to load and store a third series of protected data, and so on.

According to particular features, the method of the invention further comprises storing a sequence of series of protected data into a factory server located into a zero-trust environment, said server successively transmitting the first series of protected data to the first secure chip and the second series of protected data to the second secure chip, the second series of protected data following the first series of protected data in the sequence of series of protected data.

Thanks to these provisions, it is not necessary to provide the second series of protected data to the first secure chip because this second series of protected data is uniquely identified in the sequence of series of protected data stored in the server. For example, this server is a server of the factory loading protected data into secure chips.

It has to be noted that the second series of protected data may immediately follow the first series of protected data in the sequence of protected data or may be the separated from the first series of protected data by a predetermined number of other series of protected data.

According to particular features, the method of the invention further comprises storing a sequence of series of protected data into a factory server, said factory server successively transmitting the first series of protected data to the first secure chip and the second series of protected data to the second secure chip, the second series of protected data following the first series of protected data in the sequence of series of protected data.

According to particular features, the method of the invention further comprises loading, by the first secure chip, the first series of protected data comprising an identifier of the second series of protected data,

wherein the token generated by the first secure chip identifies the second series of protected data,

the method further comprising:

- determining, by the second secure chip, that the series of protected data transmitted to the second secure chip is the series of protected data identified by the token, and
- only if the series of protected data transmitted to the second secure chip is the series of protected data identified by the token, storing, by the second secure chip, the second series of protected data.

According to particular features, the secure chips belong to the group comprising: embedded Universal Integrated Circuit Cards, eUICCs; integrated UICCs, iUICCs; Secure Digital, SD, cards; miniSD cards; microSD cards; smart cards; integrated Secure Elements, iSE; software secure elements; secure chips and secure enclaves.

According to particular features, each secure chip is an eUICC, each series of protected data is a profile used by an eUICC to allow this eUICC, when the profile is enabled, the access to a specific mobile network infrastructure.

These particular features are specifically intended for the provision of profiles to eUICC at the factory of a mobile device.

According to particular features, the method of the invention further comprises:

- sending, by the factory server, a first request to the first eUICC, including the first profile and an initial token identifying the first eUICC,
- transmitting the generated token includes said machine receiving said token, and
- after reception of said token, said machine sending a second request to the second eUICC, including said token and the second profile.

Thanks to these provisions, a Secured Entity or an unsecured factory machine, for example a factory server, may request the secure provision of profiles to multiple eUICCs.

According to particular features, the first request comprises the EID (eUICC-ID) of the first eUICC, and the token generated by a SM-DP (Subscription Manager Data Preparation), a SM-DP+ (Subscription Manager Data Preparation enhanced) or an SM-DPf (Subscription Manager Data Preparation factory) and the second request comprises the second EID of the second eUICC and the token generated by the first eUICC.

According to particular features, the method of the invention further comprises chaining the profiles Profile_n to be loaded into eUICCs eUICC_n, wherein the profiles Profile_n are chained in a chain of profiles stored into a memory of a secure server, and wherein the generated token identifies the second profile Profile_n+1 through information belonging to the group comprising:

- an Integrated Circuit Card identifier, ICCID of Profile_n+1;
- an ICCID of a previous profile Profile_n preceding Profile_n+1 in said chain of profiles;
- a sequence number associated to Profile_n+1, each profile of the chain of profiles being associated with a different sequence number; and
- a sequence number associated to Profile_n, each profile of the chain of profiles being associated with a different sequence number.

The ICCID allows to uniquely identify a profile.

According to particular features, each one of said profiles Profile_n contains a cryptographic seed Sn, said chaining comprising:

- identifying each profile Profile_n by its ICCID_n,
- encrypting the ICCID_n with a Key KP(n), using a pseudo random function (PRF) as a cryptographic primitive, wherein the encryption key of an ICCID_n, KP(n) is such that

$$KP(n+1) = PRF\ (Sn,\ ICCID\_n+1)),$$

where:

KP(n+1) is the encryption key of profile Profile_n+1,
Sn is the seed of the profile Profile_n, and
ICCID_n+1 is the ICCID of the profile Profile_n+1.

Thanks to these provisions, at the end of loading a profile Profile_n, the seed Sn is given as output from eUICC_n and input for eUICC_n+1, allowing a manufacturer to load the profile Profile_n+1 only in one eUICC, namely eUICC_n+1.

According to particular features, the method of the invention further comprises calculating a KCV (Key Check Value) of the key KP(n+1), by eUICC_n, the KCV being the encryption of a known data with the key KP(n+1), and checking the KCV, by eUICC_n+1, including computing KP(n+1), ciphering the known data with the computed key KP(n+1), and verifying that the result is equal to the received KCV.

According to particular features, each one of said profiles Profile_n contains a cryptographic seed Sn, eUICC_n and eUICC_n+1 sharing the same encryption key Kb, and wherein the method of the invention further comprises:

- receiving, by eUICC_n, EID_n+1 (eUICC-ID) of eUICC_n+1 with Profile_n,
- computing, by eUICC_n, a token Token_n for eUICC_n+1, such that Token_n is the encryption, with key Kb of Sn and EID_n+1, and
- deciphering Token_n, by eUICC_n+1, to obtain Sn and checking EID_n+1.

According to particular features, each one of said profiles Profile_n contains a cryptographic seed Sn, eUICC_n and eUICC_n+1 sharing the same encryption key Kb, and wherein the method of the invention further comprises:

- receiving, by eUICC_n, EID_n+1 (eUICC-ID) of eUICC_n+1 with Profile_n,
- computing, by eUICC_n, a token Token_n for eUICC_n+1, using a pseudo random function (PRF) as a cryptographic primitive, such that

$$Token\_n = PRF\ (Kb,\ EID\_n+1,\ Sn),$$

and
- deciphering Token_n, by eUICC_n+1, to obtain Sn and checking EID_n+1.

According to particular features, the method of the invention further comprises :

- including ICCID_n+1 and ICCID_n+2 in Profile_n, wherein Token_n includes at least the signature of EID_n+1 and EID_n+2 by a private key PrivateKey_n of eUICC_n and Certificate_n, which is a static public Key of eUICC_n signed by a Certification Authority CA,
- detecting that eUICC_n+1 is unable to load and store Profile_n+1,
- sending Token_n to eUICC_n+2 together with a request for recovery Recovery Request,
- determining, by eUICC_n+2, if Token_n has been issued by eUICC_n, and if EID_n+2 is included in Token_n at the second position,
- only if it is determined by eUICC_n+2 that Token_n has been issued by eUICC_n, calculating a recovery token RecovToken_n+2 by eUICC_n+2, wherein RecovToken_n+2 = Sign(Recovery Request | EID_n+2)[PrivateKey_n+2] | Certificate_n+2

- sending RecovToken_n+2 to eUICC_n,
- determining, by eUICC_n, if RecovToken_n+2 has been issued by eUICC_n+2,
- only if it is determined by eUICC_n that RecovToken_n+2 has been issued by eUICC_n+2, calculating, by eUICC_n, a token for recovery TokenRecov_n+2, wherein
  TokenRecov_n+2 includes at least the signature of EID_n+2 by PrivateKey_n and Certificate_n,
- determining, by eUICC_n+2, if TokenRecov_n+2 has been issued by eUICC_n,
- only if it is determined by eUICC_n+2 that TokenRecov_n+2 has been issued by eUICC_n, storing Profile_n+2 in eUICC_n+2 and generating, by eUICC_n+2, Token_n+2.

Thanks to this provision, when an eUICC malfunctions, here eUICC_n+1, the following eUICC, here eUICC_n+2, is able to load and store the profile that was intended for it, here Profile_n+2 and to restart the method of the invention for the other eUICCs in the chain of eUICCs.

According to particular features:

$$Token\_n = Sign(EID\_n+1 \mid EID\_n+2)[PrivateKey\_n] \mid CipherK \mid Certificate\_n,$$

in which

$$CipherK = AES\_GCM(Kn)[ShS], \quad ShS = ECKA(PrivateKey\_n, \; PublicKey\_n+1),$$

Kn being a Key value of Profile_n, needed to decrypt Profile_n+1, RecovToken_n+2 = Sign(Recovery Request | EID_n+2)[PrivateKey_n+2] | Certificate_n+2, and

TokenRecov_n+2 = Sign(EID_n+2)[PrivateKey_n] | CipherK+1 | Certificate_n, in which CipherK+1 = AES_GCM(Kn+1)[ShS], ShS = ECKA(PrivateKey_n, PublicKey_n+2), Kn+1 being a Key value of Profile_n, needed to decrypt Profile_n+2.

According to particular features,

$$Token\_n = Sign(EID\_n+1 \mid EID\_n+2 \mid Xn)[PrivateKey\_n] \mid Certificate\_n,$$

Xn being a random value from Profile_n, RecovToken_n+2 = Sign(Recovery Request | EID_n+2)[PrivateKey_n+2] | Certificate_n+2, and

$$TokenRecov\_n+2 = Sign(EID\_n+2 \mid Xn+1)[PrivateKey\_n] \mid Certificate\_n, \; Xn+1$$

being a random value from Profile_n.

According to particular features:

$$\text{Token\_n = Sign(EID\_n+1 | EID\_n+2 | Nbn)[PrivateKey\_n] | Certificate\_n,}$$

Nbn pointing the profile Profile_n in the chain of profiles, RecovToken_n+2 = Sign(Recovery Request | EID_n+2)[PrivateKey_n+2] | Certificate_n+2,

and

$$\text{TokenRecov\_n+2 = Sign(EID\_n+2 | Nbn+1)[PrivateKey\_n] | Certificate\_n, Nbn+1}$$

pointing the profile Profile_n+1 in the chain of profiles.

According to particular features, eUICC_n+2 stores in its memory that eUICC_n+1 is malfunctioning and rejects any token from eUICC_n+1,

According to particular features, eUICC_n stores in its memory that eUICC_n+1 is malfunctioning and rejects any further request for recovery token.

**BRIEF DESCRIPTION OF THE DRAWINGS**

Further advantages, purposes and particular features of the invention will be apparent from the following non-limiting description of at least one particular embodiment of the method and devices which are the subject of the present invention, with reference to the enclosed drawings, in which :

- Figure 1 illustrates, schematically, a system structure for profile management in an eUICC integrated with a user host terminal implementing the present invention,
- Figure 2 is a succession of steps performed by one factory server and two eUICCs and the corresponding messages sent and received by those eUICCs, in a first embodiment of the method of the invention,
- Figure 3 is a succession of steps performed by one factory server and two eUICCs and the corresponding messages sent and received by those eUICCs, in a second embodiment of the method of the invention,
- Figure 4 is a succession of steps performed by one factory server and three eUICCs and the corresponding messages sent and received by those eUICCs, in a particular embodiment of a first recovery method in case of failure of an eUICC,
- Figure 5 is a succession of steps performed by one factory server and three eUICCs and the corresponding messages sent and received by those eUICCs, in a particular embodiment of a second recovery method in case of failure of an eUICC, and
- Figure 6 is a succession of steps performed by one factory server and three eUICCs and the corresponding messages sent and received by those eUICCs, in a particular embodiment of a third recovery method in case of failure of an eUICC.

**DETAILED DESCRIPTION OF EMBODIMENTS**

The present description is given by way of non-limitation, each feature of one embodiment being capable of being combined with any other feature of any other embodiment in an advantageous manner. It is noted at the outset that the figures are not to scale.

As will be appreciated from the present description, various inventive concepts may be implemented by one or more of the methods or devices described below, several examples of which are provided herein. The actions or steps carried out in carrying out the method or device may be ordered in any suitable manner. Accordingly, it is possible to construct embodiments in which the actions or steps are performed in an order different from that illustrated, which may include performing certain acts simultaneously, even if they are presented as sequential acts in the illustrated embodiments.

The expression "and/or", as used herein and in the claims, is to be understood to mean "either or both" of the elements so conjoined, i.e., elements that are present conjunctively in some cases and disjunctively in other cases. Multiple elements listed with 'and/or' are to be interpreted in the same way, i.e., 'one or more' of the elements so joined. Other elements may possibly be present, other than the elements specifically identified by the "and/or" clause, whether or not they are related to those specifically identified elements. Thus, by way of non-limiting example, a reference to "A and/or B", when used in conjunction with an open-ended language such as "comprising" may refer, in one embodiment, to A only (possibly including elements other than B); in another embodiment, to B only (possibly including elements other than A); in yet another embodiment, to both A and B (possibly including other elements); etc.

As used in this description and in the claims, the expression "at least one", in reference to a list of one or more elements, is to be understood to mean at least one element selected from one or more elements in the list of elements, but not necessarily including at least one of each specifically enumerated element in the list of elements and not excluding any combination of elements in the list of elements. This definition also allows for the optional presence of elements other than the specifically identified elements in the list of elements to which the phrase "at least one" refers, whether or not they are related to those specifically identified elements. Thus, by way of non-limiting example, "at least one of A and B" (or, equivalently, "at least one of A or B", or, equivalently, "at least one of A and/or B") may refer, in one embodiment, to at least one, possibly including more than one, A, with no B present (and possibly including elements other than B) ; in another embodiment, to at least one, optionally including more than one, B, without A present (and optionally including elements other than A); in yet another embodiment, to at least one, optionally including more than one, A, and at least one, optionally including more than one, B (and optionally including other elements); etc.

In the claims, as well as in the description below, all transitional expressions such as "comprising", "including", "carrying", "having", "containing", "involving", "holding", "composed of", and the like, are to be understood as being open-ended, i.e., as meaning including, but not limited to. Only the transitional expressions "consisting of" and "consisting essentially of" are to be understood as closed or semi-closed transitional expressions, respectively.

The present invention is concerned with the management of secure chips such as eUICCs, and in particular with the management of subscriber profiles in such eUICCs.

A secure element, referred to as SE, is a tamper-resistant hardware component or platform (typically a chip) used in a host terminal and capable of securely hosting applications and data in accordance with security rules and requirements set by trusted authorities.

Among the three form factors of an OS, the UICC defines a physical chip that contains the application that authenticates a user in a mobile network to access services (voice, data, etc.). To this end, it contains applications such as the Universal Subscriber Identity Module (USIM) application that holds the subscriber's identification information and allows authentication in the mobile network.

An eUICC is a UICC chip that is integrated or soldered into a host terminal. Mechanisms have been envisaged to securely manage different subscriptions within the same eUICC as described in the SGP.02 specification for M2M mode and SGP.22 for Consumer mode and SGP.32 for IoT (Internet of Things) eSIM IoT Technical Specification - Version 1.0 - 26 May 2023.

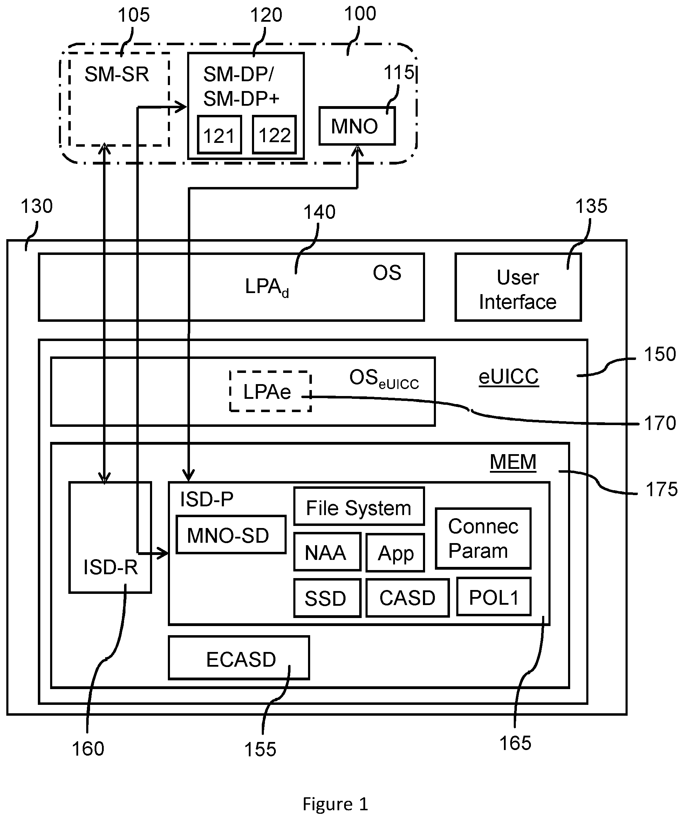

Figure 1 shows schematically a system structure for profile management in an eUICC integrated with a user host terminal, as derived from SGP.22 (Consumer mode). The M2M mode is based on a similar architecture in which, however, LPA modules (intermediaries mainly dedicated to end-user interactions) are not implemented since the operations are initiated by the servers.

A mobile network 100 is illustrated, corresponding for example to a mobile phone operator MNO. In a known way, several mobile networks can coexist, corresponding to several operators and thus several profiles on the user terminals.

The mobile network 100 comprises a secure routing unit SM-SR 105 of a subscription management server SM (not shown for better readability), a data preparation unit SM-DP 120 of (the same) subscription management server and servers 115 specific to the MNO managing this mobile network. The well-known main functions of these units/servers are described below. Although the SM-SR and SM-DP servers are shown separately, they can be implemented within the same server (denoted SM-DP+).

The present invention is also applicable to other mobile network architectures.

An SM-DP+ server 120 comprises, in simplified form, a profile package binding function 121 and a profile package delivery function 122. In the case of an SM-DP server accompanied by an SM-SR server, the profile package delivery function is performed by the SM-SR server.

A user terminal 130, e.g., a mobile phone, smartphone, computer, tablet, etc., includes an eUICC card 150 for securely accessing services of the mobile network 100.

In Figure 1, only a user terminal 130 carrying an eUICC card is shown.

Of course, the mobile network generally includes a plurality of such mobile terminals equipped with eUICC (or SIM, UICC) cards. The present description focuses on eUICC cards by way of example. Generally speaking, the present invention can be implemented in any type of secure SE containing a plurality of subscriber profiles, for example embedded secure elements, or "eSE".

The user terminal 130 comprises an operating system OS capable of controlling a communication interface (not shown) with the mobile network and of interfacing this communication interface with the eUICC 150, as well as a user interface (keyboard, screen, etc.) 135 allowing a user (in particular in the Consumer mode) to interact.

In an embodiment relating to the Consumer mode, the OS includes a local profile assistant, LPAd, 140 providing profile management services. For example, these services (not show) may include a Local Discovery Service (LDS) to find out the profiles P present in the eUICC 150 and their active or inactive status, a Local Profile Download (LPD) service to perform the sequential operations of loading or updating a profile P and a Local User Interface (LUI) service to retrieve/acquire the profile management actions initiated locally by the user (loading, storing, activation, deactivation, ...).

In another embodiment relating to the consumer mode, the local profile assistant is embedded in the eUICC. It is then referred to as LPAe (dotted reference 170).

The eUICC board 150 comprises an OSeUICC operating system (stored in non-volatile memory such as read-only memory or flash memory) coupled to a non-volatile memory MEM 175. The operating system implements functions (not shown) in the Telecom framework and for profile management, typically a Profile Package Interpreter and a Profile Policy Enabler. Other classical components present in the eUICC card are not shown here for reasons of clarity: interface (and associated controller) for communication with the host terminal, RAM, data bus, processor, etc.

In accordance with the above-mentioned standards, the eUICC 150 card includes, in non-volatile memory (MEM) 175, several security domains for the management of the card and of subscriber profiles, each security domain being identified by a unique AID (Application Identifier):

an embedded UICC Controlling Authority Security Domain ("ECASD") 155 responsible for the secure storage of credentials required by the eUICC security domains;

an Issuer Security Domain - Root ("ISD-R") 160 defined, at the time of the eUICC manufacturing, as representative of the card owner 150 and therefore accessible (via a particular cryptographic key set) only by the card owner. In the Consumer mode, the ISD-R 160 includes LPA services capable of establishing a dialogue with the LPAd 140 or LPAe 170 assistant;

one or more Issuer Security Domain-Profile (ISD-P) domains 165, each of which is generally dedicated to an MNO. Each ISD-P domain is a secure container (protected by a set of cryptographic keys in particular) designed to store, in a secure manner, a single subscriber profile P associated with a service subscription with the corresponding MNO operator and to allow access to it. One of the ISD-Ps may include a default initial profile (known as a "provisioning profile") allowing network connectivity with the SM-SR 105 unit.

The subscriber profile is identified by a unique ICCID (Integrated Circuit Card IDentifier).

The ISD-P includes a routine used for downloading and installing the profile in conjunction with the profile package interpreter for decoding and interpreting a profile package to be installed, received in a secure channel (e.g., according to SCP03t). In particular, a profile package complies with the standard: "eUICC Profile Package: Interoperable Format Technical Specification", Version 3.2, referred to as the "TCA specification" (for Trusted Connectivity Alliance) in the following.

In a known way, a communication profile P includes subscription data (for example an IMSI identifier, cryptographic keys, authentication algorithms and NAA network access application, etc.) and may also include a file system, App applications, and/or predetermined execution rules.

According to the above-mentioned standards, a profile is composed of Profile Components including :

an MNO-SD (Operator Security Domain) containing operator OTA keys to enable the establishment of a secure OTA channel,

Supplementary Security Domains (SSD) and a Security Domain CASD,

applications/applets (App),

at least one Network Access Application (NAA),

a File system,

Profile metadata including connectivity parameters (Connec Param) and profile policy rules (POL1 for example).

This metadata may include an ICCID (Integrated Circuit Card Identifier) which uniquely identifies the profile.

Although a single profile P (ISD-P) is illustrated in Figure 1, the eUICC 150 card may comprise a plurality of ISD-P security domains and thus a plurality of profiles each of which may be in an active or inactive state. Each profile or corresponding ISD-P is identified by an ICCID.

The root security domain ISD-R is privileged in that it is able to create or delete ISD-P security domains in the non-volatile memory MEM 175, and to activate or deactivate P profiles stored in the ISD-P 165 of the eUICC.

As known from the above specifications, this management is achieved by the exchange of messages (commands, responses) between the SM-SR 105 (or the SM-DP+) and the ISD-R 160 root domain. The different management functions and commands of the eUICC 150 are defined in these documents SGP.02 for the M2M mode and SGP.22 for the Consumer mode. The communication between the SM-SR 105 and the ISD-R 160 can be carried by the http protocol and be provided and/or protected by the SCP80, SCP81 or CAT-TP protocol.

The secure loading, storing, updating or deletion of profiles in the ISD-P 165 secure domains is achieved by the exchange of messages (commands, responses) between the SM-DP 120 and each relevant ISD-P secure domain of the eUICC 150. In particular, the SM-DP 120 prepares the profile packages to be loaded into the eUICC and then sends them to the relevant ISD-P 165 domain, via the SM-SR 105 and the ISD-R 160. Again, APDU messages are used. The communication between the SM-DP 120 and the ISD-P 165 (via the SM-SR 105) can be carried over the http protocol and be protected by the SCP02 or SCP03 or SCP03t protocol, itself tunneled or encapsulated in the SM-SR - ISD-R link protected by the SCP80, SCP81 or CAT-TP protocol.

When applied to loading and storing profiles into eUICCs, the goal of the present invention is to allow a profile to be stored only once into one eUICC non-volatile memory.

In the following description, the phrase "loading a profile" means "loading and storing in a memory a profile that may be activated".

The following relates to the application of the invention to loading and storing profiles into eUICCs.

The embodiments of the method according to the present invention use profile chaining. A chain of profiles has the property that a profile in the chain can only be loaded, if the previous profile in the chain was successfully loaded.

As to profile chaining, in a first example, the goal is to prove that the previous profile has been loaded, in the Profile Chaining, that proof is provided by the eUICC signature of a "well known" information, such as ICCID_n / Nbn (pointing the profile Profile_n in the chain, that has been loaded):

- each profile is created in a sequential order of ICCID_n and/or a number in the chain of profiles,
- an eUICC_n that loads Profile_n, retrieves ICCID_n/or Nbn from the profile Profile_n being loaded, and can send to the next eUICC_n+1, ICCID_n or Nbn,
- the eUICC_n that loads Profile_n, signs either ICCID_n or Nbn to be sent to the next eUICC_n+1,
- the eUICC_n that loads Profile_n, generates a TokenProfN that the next eUICC_n+1 can check,
- the next eUICC_n+1 checks that TokenProfN is valid (i.e., determines that the token has been issued by eUICC_n), and, if that token is valid, derives the expected ICCID_n+1 of Profile_n+1 to be loaded by this next eUICC_n+1 (if that token is not valid, Profile_n+1 is discarded),
- TokenProfN is basically a Data Signed from which an eUICC can derive the ICCID of the profile to be loaded;

  ○ in a symmetric approach, all eUICCs share a key Kbatch and TokenProfN = HMAC(EID_n+1)[Kbatch];
  ○ in an asymmetric approach, all eUICCs are from the same OEM (Original Equipment Manufacturer), or share a Root CA (Certification Authority). Their public key has the same CA Certificate and TokenProfN = Sign(ICCID_n) [PrivateKey_n] + Certificate chain of EID_n; and

- eUICC_n+1, having EID_n+1, receives TokenProfN, checks Certificate chain of eUICC_n (i.e., verifies EID_n), checks signature and retrieves the ICCID_n in TokenProfN and expect receiving only profile ICCID_n+1.

In a second example, the goal is to prove that the previous profile has been loaded, in the Profile Chaining. That proof is provided by the eUICC_n computation from a provided token (Xn-1) that is compared to a provided information. This profile chaining implies that additional information related to the profile is provided (PCI, which stands for Profile Chaining Information) and the eUICC needs to check it, which implies certificate verification chain:

- Xn-1 is a random value from Profile_n-1, that is confidential in this profile,
- Hn is a hash of Xn-1 and ICCID_n, for example Hn = SHA(Xn-1|ICCID_n), SHA standing for "Secure Hash Algorithm";
- ICCID_n is provided to eUICC_n for profile loading, together with Hn (signed by SM-DPf (standing for Subscription Manager Data Preparation factory)) and Xn-1, provided as "token" from previous loading;
- Profile Chaining Information is integrity protected and authenticated, to be sure the provided Hn has not been tampered and comes from an allowed entity; and
- eUICC_n+1 computes Hn with information from eUICC_n, and checks if the provided Hn for profile loading in the PCI is identical to the computed Hn.

In a third example, the goal is to prove that the previous profile Profile_n has been loaded. That proof is provided by the eUICC_n, which provides the key to decrypt the next profile Profile_n+1. That information is "cryptographically computed" for transmission:

- each profile is created in a sequential order of ICCID_n and/or a number in the chain (as in the first example of profile chaining);
- eUICC_n loading Profile_n, retrieves Kn, the key that ciphers Profile_n+1;
- after Profile_n is loaded, that key Kn is sent to the next eUICC_n+1;
- the next eUICC_n+1 can only load successfully Profile_n+1 if the key Kn is the proper one; and
- Kn needs to be provided securely (i.e., ciphered) to the next eUICC_n+1, either via a "Share Secret" between the eUICCs or via asymmetrical PKI encryption (PKI stands for "Public Key Infrastructure").

For example, Certificate_x being a static public Key of eUICC_x signed by a Certification Authority CA:

- eUICC_n loads Profile_n, retrieves Kn and receives the public key of eUICC_n+1 in Certificate_n+1;
- eUICC_n verifies Certificate_n+1;
- eUICC_n computes Shared Secret between eUICC_n and eUICC_n+1, such as ShS = ECKA(PrivateKey_n, Public Key_n+1), ECKA standing for "Elliptic Curve Key Agreement";
- eUICC_n ciphers Kn, with AEAD (standing for "Authenticated Encryption with Associated Data", e.g., GCM, standing for "Galois/Counter Mode"), and transmits it to eUICC_n+1, such as TokenProfN = AES_GCM(Kn)[ShS] | Certificate_n, AES standing for "Advanced Encryption Standard"; and
- eUICC_n+1 receives TokenProfN, checks Certificate_n (verifies the previous eUICC_n authenticity), computes the ShS on its side (ShS = ECKA(PrivateKey_n+1, PublicKey_n)), decrypts Kn and checks the authenticity of AES_GCM.

The fourth example of profile chaining is a variant of the third one. It uses Chaining by seed to compute a Key. Each profile is created in a sequential order of ICCID and/or a number in the chain (as in the first example of profile chaining);

- eUICC_n loading Profile_n, retrieves seed Sn that is used by the next eUICC_n+1 to compute the key that ciphers Profile_n+1;
- after the profile being loaded, that seed Sn is sent to the next eUICC_n+1;
- the next eUICC_n+1 can only load successfully Profile_n+1 if the key computed is the proper one; and
- Sn needs to be provided securely (i.e., ciphered) to the next eUICC_n+1, either via a "shared secret" between the eUICCs or via asymmetrical PKI encryption. For example:

  - eUICC_n loads Profile_n, retrieves Sn and receives eUICC_n+1 public key PublicKey_n+1,
  - eUICC_n verifies Certificate_n+1 (the whole chain),
  - eUICC_n computed a secret shared between eUICC_n and eUICC_n+1, e.g., ShS = ECKA(PrivateKey_n, PublicKey_n+1),
  - eUICC_n ciphers Sn, with AEAD (e.g., GCM), and transmits Sn to eUICC_n+1, TokenProfN = (AES_GCM(Sn)[ShS]) | Certificate_n, and
  - eUICC_n+1 receives TokenProfN, checks Certificate_n of eUICC_n, computes the ShS on its side (ShS = ECKA(PrivateKey_n+1, PublicKey_n)), decrypts Sn, checks the authenticity and recomputes the ciphering key for Profile_n+1: Kn+1=PRF(ICCID_n+1,Sn).

Some embodiments of the method according to the present invention, such as first embodiment below, further use EID chaining. EID chaining is the property for an eUICC_n to generate an EID token that allows another eUICC_n+1, known to the eUICC_n, to load the next profile of the chain.

In an example of EID chaining:

- eUICC_n receives information EID_n+1, and
- eUICC_n generates an EIDToken, which validity is checked by eUICC_n+1 as to the validity of the provided EID_n+1: if eUICC_n+1 is identified in the token EID_n+1, the validity is confirmed.

EID tokens are only generated by eUICCs and are verifiable by eUICCs. EIDToken is basically signed data. In a symmetric approach, all eUICCs share a key Kbatch and EIDToken = HMAC(EID_n+1)[Kbatch].

In an asymmetric approach, all eUICCs are from the same OEM, or share a Root CA. Their public key has the same CA Certificate. EIDToken = Sign(EID_n+1) [PrivateKey_n] + Certificate chain of EID_n. For example:

- eUICC_n receives EID_n+1 and signs it,
- EIDToken_n = Sign(EID_n+1)[PrivateKey_n] | Certificate_n, and
- EID_n+1 receives this token, checks that the EID in this token is EID_n+1, checks certificate chain of eUICC_n and checks signature.

Preferably, eUICC chaining is combined with profile chaining. eUICC chaining mandates eUICC_n to perform a signature for next eUICC_n+1. Symmetric approaches are not relevant for chaining, only asymmetric approaches are to be considered. When the ciphering of profile is performed via asymmetric methods, preferably, a combination of eUICC chaining with the third example of profile chaining is used.

It has to be noted that EID chaining is done using the public key of eUICC_n+1, PublicKey_n+1, which is unique. That mechanism has been used in the previous example. The use of a secret shared or a signature by eUICCs is an optimization to limit the number of cryptographic mechanisms.

For example:

- eUICC_n: Load Profile_n, retrieves Kn and receives the public key PublicKey_n+1 of eUICC_n+1 in Certificate_n+1, eUICC_n verifies Certificate_n+1 (the whole chain), eUICC_n computes a secret shared between eUICC_n and eUICC_n+1, for example ShS = ECKA(PrivateKey_n, PublicKey_n+1), cipher Kn, with AEAD (e.g. GCM), for example CipherK = AES_GCM(Kn)[ShS] and provides the eUICC chaining information (on top of usage of Certificate_n+1) : TokenProfN = Sign(EID_n+1)[PrivateKey_n] | CipherK | Certificate_n, and
- eUICC_n+1 receives TokenProfN, checks EID part of TokenProfN to check if the received EID is EID_n+1, checks Certificate_n chain of eUICC_n (i.e., verifies the previous eUICC authenticity), computes the ShS on its side (ShS = ECKA(PrivateKey_n+1, PublicKey_n)), decrypts Kn and check the authenticity of AES_GCM.

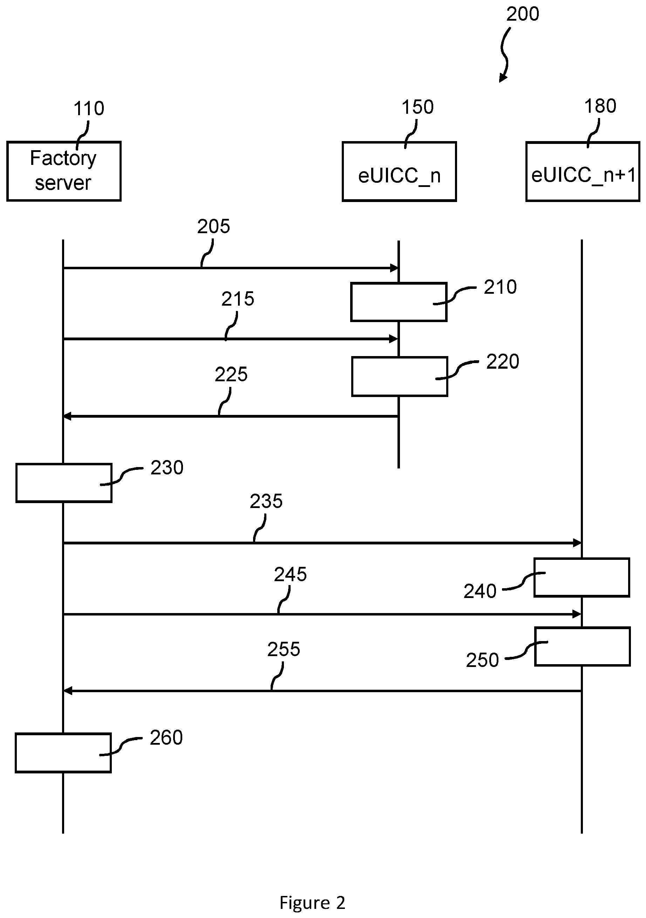

**First embodiment of the method (Figure 2)**

In this first embodiment, after loading a profile, each eUICCs binds another profile to be loaded into another eUICC. More particularly, as shown in Figure 2, a method 200 for loading profiles into eUICCs first comprises a step 205 of transmission of a message requesting a first eUICC_n 150 to load a first profile "Profile_n". This message is sent by a factory server 110 to eUICC_n 150, for example through a local profile assistant, LPAd 140 providing profile management services. The factory server 110 is in a zero-trust environment, namely a factory. This message includes Profile_n and an initial token computed from a first ICCID_n identifying Profile_n and a first EID_n identifying eUICC_n 150. The first token is typically computed by the SM-DP 120. The SM-DP computes only this first token. By this way, the security of the first element of the chain is guaranteed. All subsequent tokens will be computed by the eUICCs themselves. The SM-DP is also in charge of generating all the profiles to be loaded into the eUICCs and guaranteeing the chaining between the profiles during their generation. All the profiles generated by the SM-DP are sent to the factory server 110 and stored into the factory server 110. Security and integrity of the profiles are guaranteed thanks to a sending to the factory server and a storing into the factory server through a ciphered and/or authenticated way. The factory server is then, after reception and storing of the profiles in its memory, in charge of loading the profiles into the eUICCs.

During a step 210, eUICC_n 150 checks that the EID_n received from server 110 is its EID. If it is, eUICC_n 150 loads Profile_n into non-volatile memory (MEM) 175.

During a step 215, factory server 110 sends a second message to eUICC_n 150, for example through LPAd 140. This second message is a request to generate a Token computed from EID_n+1 and a ParallelFactor equal to 1.

During a step 220, eUICC_n 150 generates the requested Token to allow the eUICC_n+1 180 to load a second profile "Profile_n+1".
eUICC_n 150 thus binds the loading of Profile_n+1 to a specific eUICC_n+1 180.

During step 220, eUICC_n 150 also internally stores the information related to that binding to forbid the creation of any other token for Profile_n+1. In other words, to avoid an attacker to use a token on a profile on multiple eUICCs, (e.g., to create token for Profile_n+1 and to load it on different eUICCs), the token generated always binds a unique profile identifier, ICCID, to a unique eUICC identifier, EID_n. In SM-DP server 120, the profiles are chained one with another. There is some element in Profile_n linking to profile_n+1. Typically, a field called "Next_ICCID", which contains an identifier of the next profile. In other embodiments, the ICCID are sequentially ordered and the Profile identifier is a sequence number.

The token generated by eUICC_n 150 during step 220 identifies ICCID_n+1 of the next profile, Profile_n+1, to be loaded into eUICC_n+1 180. During a step 225, eUICC_n 150 sends back the requested token to factory server 110. It is noted that the Profile Installation Result as per GSMA SGP.22 might be used for the purpose of confirming the loading of Profile_n.

During a step 230, factory server 110 stores the received token in its memory and reads Profile_n+1 from its memory.

During a step 235 factory server 110 sends a message requesting a second eUICC_n+1 180 to load the second profile "Profile_n+1". This message is sent by factory server 110 to eUICC_n+1 180 of a device, for example through a local profile assistant, LPAd of that device. This message includes Profile_n+1 and the token generated by eUICC_n 150 from ICCID_n+1 identifying Profile_n+1 and EID_n+1 identifying eUICC_n+1 180.

During a step 240, eUICC_n+1 180 checks that the EID_n+1 received from factory server 110 is its EID_n+1. If it is, eUICC_n+1 180 loads and stores Profile_n+1 in its non-volatile memory if and only if:

- The received token is valid for eUICC_n+1 180 and the received Profile_n+1,
- The request identifies the EID of eUICC_n+1 180, and
- ICCID_n+1 is the ICCID of the received profile Profile_n+1.

The afore-mentioned ParallelFactor relates to the number of Profiles stored in factory server 110 between profiles that are linked. In the example above, ParallelFactor is equal to one, which means that the next profile Profle_n+1 identified by the token sent back to factory server 110 by eUICC_n 150 is the following one in the factory server memory. To allow parallel loadings of profiles from the memory of factory server 110 by a number N of eUICCs, ParallelFactor can be higher than one. For example, the ParallelFactor equals to three, means that Profile_n will identify Profile_n+3.

Steps 245 to 260 are similar to steps 215 to 230 described above and the process continues until there is no more profile to load into an eUICC or there is no more eUICC that has not received a profile to load into its memory.

A first example of cryptographic implementation of the profile chaining mechanism is now described. This example uses symmetric encryption keys.

A profile Profile_n is identified by its ICCID_n is encrypted with a Key KP(n). Each Profile Profile_n contains a Seed called Sn. PRF is a cryptographic primitive (PRF stands for "Pseudo Random Function"). The chaining is performed via the relation

$$KP(n+1) = PRF(Sn, ICCID\_n+1))$$

Where:

KP(n+1) is the encryption key of the Profile_n+1
Sn is the seed of profile Profile_n, and
ICCID_n+1 is the ICCID of the profile Profile_n+1.

At end of the loading of profile Profile_n identified by ICCID_n, the seed Sn is given as output, allowing the factory server to load the profile Profile_n+1. In this protocol, Sn is given as output with the KCV (Key Check Value) of the key KP(n+1). The KCV is the encryption of a known data (e.g., '00...') with the key KP(n). The receiver (here, eUICC_n+1 with profile Profile_n+1) computes KP(n+1), cipher '000...' with the computed key, and checks that the KCV is correct. This mechanism ensures that the newly derived key is the correct one.

A second example of cryptographic implementation of the profile chaining mechanism is now described. This example uses symmetric encryption keys.

All eUICCs of a batch share a same Key Kb. When a first eUICC_n loads a profile, the factory server provides the EID of the next eUICC_n+1 that will load a profile. The first eUICC_n computes a token Token_n for the next eUICC_n+1 according to:

$$Token\_n = ENC[Kb](Sn|EID\_n+1)$$

Where:

ENC[Kb] is an encryption function using Kb,
Sn is the seed of profile Profile_n, and
EID_n+1 is the EID of the next eUICC_n+1.

When an eUICC_n+1 receives Token_n, this eUICC_n+1 deciphers Token_n, retrieves Sn, and checks if the received EID is its own EID_n+1.

In a variant, Token_n = PRF(Kb, EID_n+1|Sn).

In the second implementation of the token generated by an eUICC_n to allow another eUICC_n+1 to load a chained profile, and its variant, token Token_n is a function of the EID_n+1 of the next eUICC_n+1 but not of the identifier of the next profile to be loaded. Token_n is a function of Sn relating to Profile_n, that provides the link with the next ICCID_n+1 relating to the following Profile_n+1, i.e., that identifies the following profile.

This corresponds to the following:

- The next eUICC_n+1 receives the token encrypted by the common key Kb and formed by: from the seed Sn of the eUICC_n's profile (the one generating the token for the next eUICC_n+1) and the EID_n+1 of the next eUICC_n+1, the generated Token_n = [Kb][Sn|EID_n+1];
- The next eUICC_n+1 can decrypt this token via the Kb key, which is common to the whole batch of eUICCs;
- Once the token is decrypted, the next eUICC_n+1 can already check if the token is intended for it (via the EID_n+1 value received through the token);
- The seed Sn also received through the token and accessible after the token decryption step, is used to generate the profile key KP(n+1) according to the formula KP(n+1) = PRF(Sn, ICCID_n+1). So, the link can be considered as established via this Sn. However, preferably, a verification of the generated key is performed via a transmission of a KCV (Key Check Value) using the key value KP(n+1) to allow the next eUICC_n+1 to check that its own key generation is correct (thus that the parameters used (Sn and iCCID_n+1) are the right ones); and
- a link is thus established between profiles and between eUICCs.

A third example of cryptographic implementation of the profile chaining mechanism is now described. Token_n provides a second seed Sn+1, for example such as Token_n = ENC[Kb](Sn|EID_n+1|Sn+1) and Sn+1 is used to compute KP(n+1), for example such as KP(n+1) = PRF(Sn|Sn+1,ICCID-n+1)).

Sn+1 being a parameter that is not correlated with a profile, the use of Sn+1 adds another layer of security robustness. For example, Sn+1 is known only to the eUICC_n and factory server.

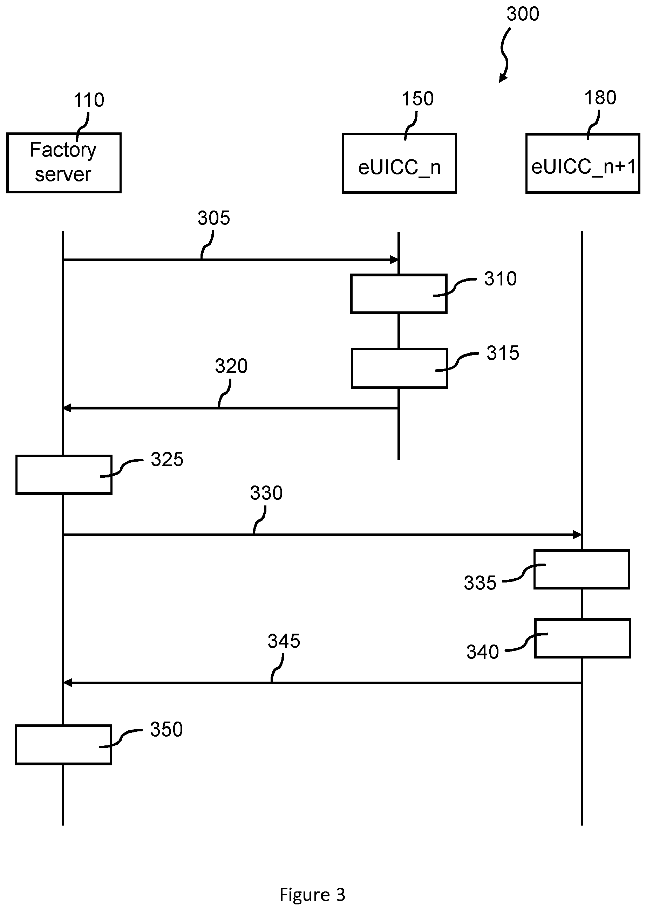

**Second embodiment of the method (figure 3)**

In this second embodiment, after loading a profile, each eUICC_n identifies another profile Profile_n+1 to be loaded into another eUICC_n+1. In this second embodiment, it is only mandatory that the profiles are loaded in sequence but the identification of the next eUICC_n+1 that will load the next profile to be loaded is not necessary. Only the result of installation of Profile_n in an eUICC_n is mandatory for the loading of Profile_n+1 in an eUICC_n+1. The link between two profiles to be loaded sequentially is provided by a field in the first profile, for example, a field called ICCID_n, which contains an identifier of the next profile to be loaded.

More particularly, as shown in Figure 3, a method 300 for loading profiles into eUICCs first comprises a step 305 of transmission of a message requesting a first eUICC_n 150 to load a first profile "Profile_n". This message is sent by factory server 110 to eUICC_n 150, for example through a local profile assistant, LPAd 140 providing profile management services. This message includes Profile_n and an initial token computed from a first ICCID_n identifying Profile_n. This initial token as aforementioned in relation with the figure 2 is computed by the SM-DP server 120.

During a step 310, eUICC_n 150 loads and stores Profile_n into non-volatile memory (MEM) 175.

During a step 315, eUICC_n 150 generates a Token computed from ICCID_n+1 identifying the next profile Profile_n+1 to be loaded and a ParallelFactor equal to 1. This token allows any eUICC to load a second profile "Profile_n+1". eUICC_n 150 thus does not bind the loading of Profile_n+1 to a specific eUICC 180.

During step 315, eUICC_n 150 also internally stores the information related to that binding to forbid the creation of any other token for Profile_n+1. In SM-DP server 110, the profiles are chained one with another. Once chained and generated, profiles are sent to the factory server and stored into its memory.

During a step 320, eUICC_n 150 sends back the requested token to factory server 110. It is noted that the Profile Installation Result as per GSMA SGP.22 might be used for the purpose of confirming the loading of Profile_n. During a step 325, factory server 110 stores the received token in its memory and reads Profile_n+1 from its memory.

During a step 330 factory server 110 sends a message requesting a second eUICC_n+1 180 to load the second profile "Profile_n+1". This message is sent by factory server 110 to the eUICC_n+1 180 of a device, for example through a local profile assistant, LPAd of that device. This message includes Profile_n+1 and the token generated by eUICC_n 150 from ICCID_n+1 identifying Profile_n+1.

During a step 335, eUICC_n+1 180 checks that the ICCID_n+1 received from factory server 110 corresponds to the ICCID of the received profile. In other words, eUICC_n+1 180 loads and stores Profile_n+1 in its non-volatile memory if and only if ICCID_n+1 is the ICCID of the received profile Profile_n+1.

Steps 340 to 350 are similar to steps 315 to 325 described above and the process continues until there is no more profile to load into an eUICC or there is no more eUICC that has not received a profile to load into its memory.

**Variants of the embodiments**

Preferably the method of the present invention includes handling of possible profile loading failures and factory issues. This can happen if one eUICC is not able to load a profile, which could imply that all the chain of Profiles is "lost". The failure of an eUICC may be detected when this eUICC does not send any response to a request or when it sends a response meaning that it did not succeed in performing a function. In particular embodiments, in the case where an eUICC is damaged, a recovery mechanism is thus involved to continue the loading procedure without using the damaged eUICC.

To that aim, on top of ICCID, Profile_n provided by factory server 110 to eUICC_n 150 in step 405, 505 or 605, contains:

- ICCID_n, Nbn or Xn or Kn and
- ICCID_n+1, Nbn+1 or Xn+1 or Kn+1, respectively;

where Nbn point the profile Profile_n in the chain of profiles, Nbn+1 point the profile Profile_n+1 in the chain of profiles, Xn is a random value from Profile_n, that is confidential in this profile, Xn+1 is a random value from Profile_n that is confidential in this profile, Kn is a Key value of Profile_n, needed to decrypt Profile_n+1 (immediate next profile) and Kn+1 is a Key value of Profile_n, needed to decrypt Profile_n+2 (next profile of the next profile).

First recovery method

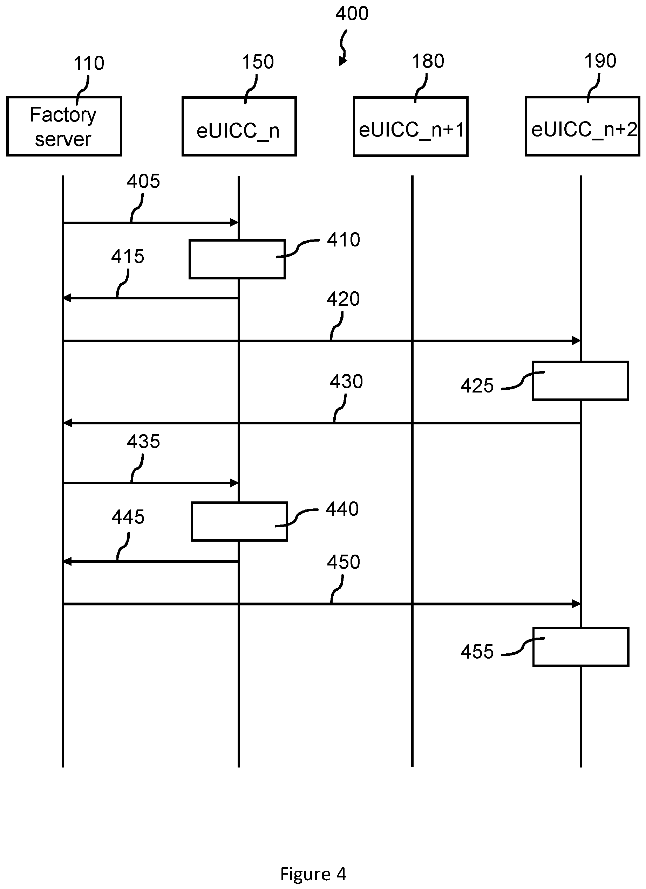

In the case where Profile_n contains ICCID_n (third example above), ICCID_n+1, Kn and Kn+1, in step 405, the following steps shown in figure 4 can be performed:

- eUICC_n 150 receives EID_n+1 and EID_n+2 and signs them, step 410, wherein eUICC_n has received in Profile_n, Kn and Kn+1, discloses Kn but does not disclose Kn+1, and
  the Cipher part (CipherK) uses the public key PublicKey_n+1 of EID_n+1:

    CipherK = AES_GCM(Kn)[ShS], ShS = ECKA(PrivateKey_n, PublicKey_n+1),
    Token_n = Sign(EID_n+1 | EID_n+2)[PrivateKey_n] | CipherK | Certificate_n is transmitted by eUICC_n to factory server 110, in step 415.

When no failure arises in eUICC_n+1 180, eUICC_n+1 checks that EID_n+2 is provided as input for immediate next eUICC_n+2, uses EID_n+2 in its own generated token, and eUICC_n+1 keeps its generated token or the information's related to it: EID_n+1, EID_n+2, Kn, Kn+1). This case is not shown in figure 4.
In case eUICC_n+1 malfunctions, eUICC_n+2 performs a chain recovery comprising the following steps shown in figure 4:

- eUICC_n+2 190 receives from the factory server 110 the token generated by eUICC_n for eUICC_n+1 (Token_n), and a "request for recovery", in step 420, but eUICC_n+2 190 cannot use CipherK because CipherK = AES_GCM(Kn)[ShS], ShS = ECKA(PrivateKey_n, PublicKey_n+1), which implies that PrivateKey_n+1 is needed for deciphering CipherK ,
- eUICC_n+2 190 checks the signature from eUICC_n, checks that its own EID_n+2 is in the token list in the second position, and generates a recovery request token RecovToken_n+2 = Sign(Recovery Request | EID_n+2)[PrivateKey_n+2] | Certificate_n+2, in step 425, and eUICC_n+2 190 stores in its memory that eUICC_n+1 180 is malfunctioning in order to reject any token from eUICC_n+1 180,
- eUICC_n+2 190 sends the recovery request to factory server 110, including RecovToken_n+2, in step 430,
- factory server 110 stores the received token in its memory and sends the recovery request to eUICC_n 150, including RecovToken_n+2, in step 435
- in step 440, eUICC_n 150 receives RecovToken_n+2, checks the signature and certificate_n+2 chain of EID_n+2, checks EID_n+2 and generates a new dedicated token for eUICC_n+2 190, TokenRecov_n+2, to enable eUICC_n+2 to load Profile_n+2 and restart the chain:

    CipherK+1 = AES_GCM(Kn+1)[ShS], ShS = ECKA(PrivateKey_n, PublicKey_n+2)

$$TokenRecov\_n+2 = Sign(EID\_n+2)[PrivateKey\_n] \mid CipherK+1 \mid Certificate\_n,$$

  and
  eUICC_n 150 keeps in memory that eUICC_n+1 180 is malfunctioning and will reject any further request for recovery token;
- in step 445, eUICC_n 150 sends TokenRecov_n+2 to factory server 110,
- in step 450, factory server 110 sends TokenRecov_n+2 to eUICC_n+2 190, together with Profile_n+2, which contains ICCID_n+2, Kn+2, ICCID_n+3, and Kn+3
- in step 455, eUICC_n+2 190 checks that EID_n+2 is provided as input for eUICC_n+2, uses EID_n+3 in its own generated token, and eUICC_n+2 keeps its generated token, or the information's related to it: EID_n+2, EID_n+3, Kn, Kn+2.

Second recovery method

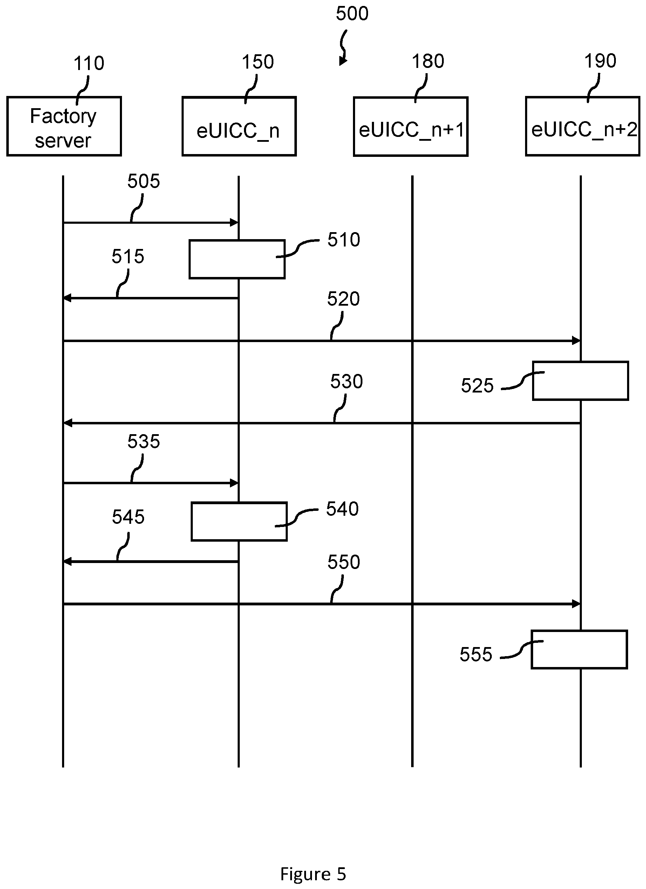

In the case where Profile_n contains ICCID_n, ICCID_n+1, Xn and Xn+1 (second example above) in step 505, the following steps shown in figure 5 can be performed:

- eUICC_n 150 receives EID_n+1 and EID_n+2 and signs them, step 510, to provide Token_n = Sign(EID_n+1 | EID_n+2 | Xn)[PrivateKey_n] | Certificate_n, that is transmitted by eUICC_n to factory server 110, in step 515.

When no failure arises in eUICC_n+1 180, eUICC_n+1 checks that EID_n+2 is provided as input for immediate next eUICC_n+2, uses EID_n+2 in its own generated token, and eUICC_n+1 keeps its generated token or the information's related to it: EID_n+1, EID_n+2, Xn, Xn+1. This case is not shown in figure 5.

In case eUICC_n+1 malfunctions, eUICC_n+2 performs a chain recovery comprising the following steps shown in figure 5:

- eUICC_n+2 190 receives the token generated by eUICC_n for eUICC_n+1 (Token_n), and a "request for recovery", in step 520,
- eUICC_n+2 190 checks the signature from eUICC_n, checks that its own EID_n+2 is in the token list in the second position, and generates a recovery token RecovToken_n+2 = Sign(Recovery Request | EID_n+2)[PrivateKey_n+2] | Certificate_n+2, in step 525, and eUICC_n+2 190 stores in its memory that eUICC_n+1 180 is malfunctioning in order to reject any token from eUICC_n+1 180,
- eUICC_n+2 190 sends the recovery request to factory server 110, including RecovToken_n+2, in step 530,
- factory server 110 sends the recovery request to eUICC_n 150, including RecovToken_n+2, in step 535,
- in step 540, eUICC_n 150 receives RecovToken_n+2, checks the signature and certificate_n+2 and chain of EID_n+2, checks EID_n+2 and generates a new dedicated token for eUICC_n+2 190, TokenRecov_n+2, to enable eUICC_n+2 to load Profile_n+2 and restart the chain:

    TokenRecov_n+2 = Sign(EID_n+2 | Xn+1)[PrivateKey_n] | Certificate_n, and
    eUICC_n 150 keeps in memory that eUICC_n+1 180 is malfunctioning and will reject any further request for recovery token;

- in step 545, eUICC_n 150 sends TokenRecov_n+2 to factory server 110,
- in step 550, factory server 110 sends TokenRecov_n+2 to eUICC_n+2 190, together with Profile_n+2, which contains ICCID_n+2, Xn+2, ICCID_n+3, and Xn+3
- in step 555, eUICC_n+2 190 checks that EID_n+2 is provided as input for eUICC_n+2, uses EID_n+3 in its own generated token, and eUICC_n+2 keeps its generated token, or the information's related to it: EID_n+2, EID_n+3, Xn, Xn+2).

Third recovery method

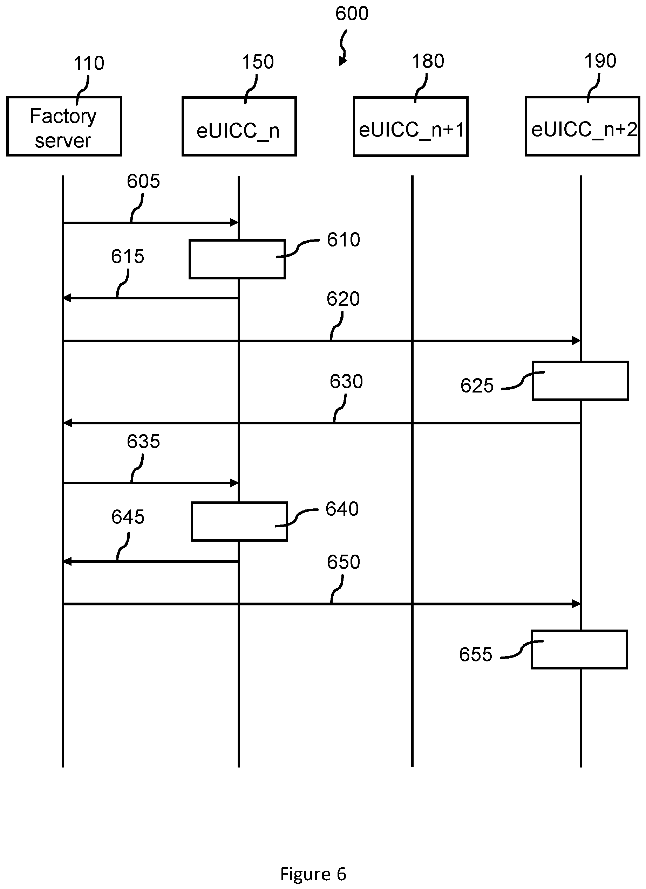

In the case where Profile_n contains ICCID_n, ICCID_n+1, or Nbn and Nbn+1, in step 605 an eUICC can deduct from its position in the token list the offset in the Profile chain. The following steps shown in figure 6 can then be performed, provided that each profile is created in a sequential order of ICCID_n and/or a number Nbn in the chain of profiles. In step 610:

- the eUICC_n 150 that loads Profile_n, generates a Token_n that the next eUICC_n+1 180 can check: Token_n = Sign(EID_n+1 | EID_n+2 | Nbn)[PrivateKey_n] | Certificate_n, in step 610.

In step 615, Token_n is sent by eUICC_n 150 to factory server 110.
When no failure arises in eUICC_n+1 180:

- eUICC_n+1 180, having EID_n+1, receives Token_n from factory server 110, checks that Token_n is valid (i.e., determines that the token has been issued by eUICC_n 150), and, if that token is valid, derives the expected ICCID_n+1 of Profile_n+1 to be loaded by eUICC_n+1 180 (if Token_n is not valid, Profile_n+1 is discarded),
- eUICC_n+1 180 checks that EID_n+2 is provided as input for immediate next eUICC_n+2 190, uses EID_n+2 in its own generated token, and eUICC_n+1 180 keeps its generated token or the information's related to it. This case is not shown in figure 6.

In case eUICC_n+1 180 malfunctions, eUICC_n+2 190 performs a chain recovery comprising the following steps shown in figure 6:

- eUICC_n+2 190 receives the token generated by eUICC_n 150 for eUICC_n+1 180, and a "request for recovery", in step 620,
- eUICC_n+2 190 checks the signature from eUICC_n 150, checks that its own EID_n+2 is in the token list in the second position, stores that eUICC_n+2 will expect a specific profile (as second in the list Nbn_+2) and generates a recovery token RecovToken_n+2 = Sign(Recovery Request | EID_n+2)[PrivateKey_n+2] | Certificate_n+2, in step 625, and eUICC_n+2 190 stores in its memory that eUICC_n+1 180 is malfunctioning in order to reject any token from eUICC_n+1 180,
- eUICC_n+2 190 sends the recovery request to factory server 110, including RecovToken_n+2, in step 630,
- factory server 110 sends the recovery request to eUICC_n 150, including RecovToken_n+2, in step 635,
- in step 640, eUICC_n 150 receives RecovToken_n+2, checks the signature and certificate_n+2 and checks EID_n+2 and generates a new dedicated token for eUICC_n+2 190, TokenRecov_n+2, to enable eUICC_n+2 to load Profile_n+2 and restart the chain:

TokenRecov_n+2 = Sign(EID_n+2 | Nbn+1)[PrivateKey_n] | Certificate_n, and
eUICC_n 150 keeps in memory that eUICC_n+1 180 is malfunctioning and will reject any further request for recovery token;

- in step 645, eUICC_n 150 sends TokenRecov_n+2 to factory server 110,
- in step 650, factory server 110 sends TokenRecov_n+2 to eUICC_n+2 190, together with Profile_n+2, which contains ICCID_n+2, Nbn+2, ICCID_n+3, and Nbn+3
- in step 655, eUICC_n+2 190 checks that EID_n+2 is provided as input for eUICC_n+2, uses EID_n+3 in its own generated token, and eUICC_n+2 keeps its generated token, or the information's related to it.

**Claims**

1. A method (200, 300) for storing series of protected data in secure chips (130) in an unsecure environment, **characterized in that** it comprises:

   - loading (205, 305, 310), by a first secure chip, a first series of protected data from a factory server, the first series of protected data comprising an identifier of a second series of protected data,
   - generating (220, 315), by the first secure chip, a token to allow a second secure chip to load the second series of protected data, the token identifying the second series of protected data,
   - internally storing (210, 310), by the first secure chip, information related to that generation of token to forbid the generation of any other token for this second series of protected data by the first secure chip,
   - transmitting (225, 320), by the first secure chip, the generated token to the factory server,
   - transmitting (235, 330), by the factory server, the generated token to the second secure chip together with the second series of protected data,
   - determining (240, 335), by the second secure chip, that the token has been issued by the first secure chip, and
   - only if the second secure chip determines that the token has been issued by the first secure chip, storing (240, 335), by the second secure chip, the second series of protected data.

2. The method according to claim 1, that further comprises storing a sequence of series of protected data into the factory server, said factory server successively transmitting the first series of protected data to the first secure chip and the second series of protected data to the second secure chip, the second series of protected data following the first series of protected data in the sequence of series of protected data.

3. The method according to any one of claims 1 or 2, the method further comprising:

   - determining, by the second secure chip, if the series of protected data transmitted to the second secure chip is the series of protected data identified by the token, and
   - only if the series of protected data transmitted to the second secure chip is the series of protected data identified by the token, storing, by the second secure chip, the second series of protected data.

4. The method according to any one of claims 1 to 3, wherein the secure chips belong to the group comprising: embedded Universal Integrated Circuit Cards, eUICCs; integrated UICCs, iUICCs; Secure Digital, SD, cards; miniSD cards; microSD cards; smart cards; integrated Secure Elements, iSE; software secure elements; secure chips and secure enclaves.

5. The method according to any one of claims 1 to 4, wherein each secure chip is an eUICC, each series of protected data is a profile used by an eUICC to allow this eUICC, when the profile is enabled, to access to a specific mobile network infrastructure.

6. The method according to claim 2 and 5, that further comprises:

- sending, by the factory server, a first request to the first eUICC, including the first profile and an initial token identifying the first eUICC,
- transmitting the generated token includes said machine receiving said token, and
- after reception of said token, said machine sending a second request to the second eUICC, including said token and the second profile.

7. The method according to claim 6, wherein the first request comprises the EID (eUICC-ID) of the first eUICC, and the token generated by a SM-DP (Subscription Manager Data Preparation), a SM-DP+ (Subscription Manager Data Preparation enhanced) or an SM-DPf (Subscription Manager Data Preparation factory) and the second request comprises the second EID of the second eUICC and the token generated by the first eUICC.

8. The method according to any one of claims 5 to 7, that further comprises chaining the profiles Profile_n to be loaded into eUICCs eUICC_n, wherein the profiles Profile_n are chained in a chain of profiles stored into a memory of a secure server, and wherein the generated token identifies the second profile Profile_n+1 through information belonging to the group comprising:

- an Integrated Circuit Card identifier, ICCID of Profile_n+1;
- an ICCID of a previous profile Profile_n preceding Profile_n+1 in said chain of profiles;
- a sequence number associated to Profile_n+1, each profile of the chain of profiles being associated with a different sequence number; and
- a sequence number associated to Profile_n, each profile of the chain of profiles being associated with a different sequence number.

9. The method according to claim 8, wherein each one of said profiles Profile_n contains a cryptographic seed Sn, said chaining comprising:

- identifying each profile Profile_n by its ICCID_n,
- encrypting the ICCID_n with a Key KP(n), using a pseudo random function (PRF) as a cryptographic primitive, wherein the encryption key of an ICCID_n, KP(n) is such that

$$KP(n+1) = PRF (Sn, ICCID\_n+1)),$$

where:

KP(n+1) is the encryption key of profile Profile_n+1,
Sn is the seed of the profile Profile_n, and
ICCID_n+1 is the ICCID of the profile Profile_n+1.

10. The method according to claim 9, that further comprises calculating a KCV (Key Check Value) of the key KP(n+1), by eUICC_n, the KCV being the encryption of a known data with the key KP(n+1), and checking the KCV, by eUICC_n+1, including computing KP(n+1), ciphering the known data with the computed key KP(n+1), and verifying that the result is equal to the received KCV.

11. The method according to claim 8, wherein each one of said profiles Profile_n contains a cryptographic seed Sn, eUICC_n and eUICC_n+1 sharing the same encryption key Kb, and wherein the method of the invention further comprises:

- receiving, by eUICC_n, EID_n+1 (eUICC-ID) of eUICC_n+1 with Profile_n,
- computing, by eUICC_n, a token Token_n for eUICC_n+1, such that Token_n is the encryption, with key Kb of Sn and EID_n+1, and
- deciphering Token_n, by eUICC_n+1, to obtain Sn and checking EID_n+1.

12. The method according to claim 8, wherein each one of said profiles Profile_n contains a cryptographic seed Sn, eUICC_n and eUICC_n+1 sharing the same encryption key Kb, and wherein the method of the invention further comprises:

- receiving, by eUICC_n, EID_n+1 (eUICC-ID) of eUICC_n+1 with Profile_n,

- computing, by eUICC_n, a token Token_n for eUICC_n+1, using a pseudo random function (PRF) as a cryptographic primitive, such that

$$Token\_n = PRF (Kb, EID\_n+1, Sn),$$

and
- deciphering Token_n, by eUICC_n+1, to obtain Sn and checking EID_n+1.

**13.** The method according to any one of claims 8 to 12, that further comprises :

- including ICCID_n+1 and ICCID_n+2 in Profile_n, wherein Token_n includes at least the signature of EID_n+1 and EID_n+2 by a private key PrivateKey_n of eUICC_n and Certificate_n, which is a static public Key of eUICC_n signed by a Certification Authority CA,
- detecting that eUICC_n+1 is unable to load and store Profile_n+1,
- sending Token_n to eUICC_n+2 together with a request for recovery Recovery Request,
- determining, by eUICC_n+2, if Token_n has been issued by eUICC_n, and if EID_n+2 is included in Token_n at the second position,
- only if it is determined by eUICC_n+2 that Token_n has been issued by eUICC_n, calculating a recovery token RecovToken_n+2 by eUICC_n+2, wherein

$$RecovToken\_n+2 = Sign(Recovery\ Request\ |\ EID\_n+2)[PrivateKey\_n+2]\ |\ Certificate\_n+2$$

- sending RecovToken_n+2 to eUICC_n,
- determining, by eUICC_n, if RecovToken_n+2 has been issued by eUICC_n+2,
- only if it is determined by eUICC_n that RecovToken_n+2 has been issued by eUICC_n+2, calculating, by eUICC_n, a token for recovery TokenRecov_n+2, wherein TokenRecov_n+2 includes at least the signature of EID_n+2 by PrivateKey_n and Certificate_n,
- determining, by eUICC_n+2, if TokenRecov_n+2 has been issued by eUICC_n,
- only if it is determined by eUICC_n+2 that TokenRecov_n+2 has been issued by eUICC_n, storing Profile_n+2 in eUICC_n+2 and generating, by eUICC_n+2, Token_n+2.

**14.** The method according to claim 13, wherein:

Token_n = Sign(EID_n+1 | EID_n+2)[PrivateKey_n] | CipherK | Certificate_n, in which CipherK = AES_GCM(Kn) [ShS], ShS = ECKA(PrivateKey_n, PublicKey_n+1), Kn being a Key value of Profile_n, needed to decrypt Profile_n+1, RecovToken_n+2 = Sign(Recovery Request | EID_n+2)[PrivateKey_n+2] | Certificate_n+2, and
TokenRecov_n+2 = Sign(EID_n+2)[PrivateKey_n] | CipherK+1 | Certificate_n, in which CipherK+1 = AES_GCM(Kn+1)[ShS], ShS = ECKA(PrivateKey_n, PublicKey_n+2), Kn+1 being a Key value of Profile_n, needed to decrypt Profile_n+2.

**15.** The method according to claim 13, wherein:
Token_n = Sign(EID_n+1 | EID_n+2 | Xn)[PrivateKey_n] | Certificate_n, Xn being a random value from Profile_n, RecovToken_n+2 = Sign(Recovery Request | EID_n+2)[PrivateKey_n+2] | Certificate_n+2, and

$$TokenRecov\_n+2 = Sign(EID\_n+2\ |\ Xn+1)[PrivateKey\_n]\ |\ Certificate\_n,\ Xn+1$$

being a random value from Profile_n.

**16.** The method according to claim 13, wherein:

Token_n = Sign(EID_n+1 | EID_n+2 | Nbn)[PrivateKey_n] | Certificate_n, Nbn pointing the profile Profile_n in the chain of profiles, RecovToken_n+2 = Sign(Recovery Request | EID_n+2)[PrivateKey_n+2] | Certificate_n+2, and

$$TokenRecov\_n+2 \ = \ Sign(EID\_n+2 \ | \ Nbn+1)[PrivateKey\_n] \ | \ Certificate\_n, \ Nbn+1$$

pointing the profile Profile_n+1 in the chain of profiles.

17. The method of any one of claims 13 to 16, wherein eUICC_n+2 stores in its memory that eUICC_n+1 is malfunctioning and rejects any token from eUICC_n+1,

18. The method of any one of claims 13 to 17, wherein eUICC_n stores in its memory that eUICC_n+1 is malfunctioning and rejects any further request for recovery token.


**Patentansprüche**

1. Verfahren (200, 300) zum Speichern von Reihen geschützter Daten in sicheren Chips (130) in einer unsicheren Umgebung, **dadurch gekennzeichnet, dass** es umfasst:

   - Laden (205, 305, 310), durch einen ersten sicheren Chip, einer ersten Reihe geschützter Daten von einem Fabrikserver, wobei die erste Reihe geschützter Daten eine Kennung einer zweiten Reihe geschützter Daten umfasst,
   - Erzeugen (220, 315), durch den ersten sicheren Chip, eines Tokens, um einem zweiten sicheren Chip zu ermöglichen, die zweite Reihe geschützter Daten zu laden, wobei das Token die zweite Reihe geschützter Daten identifiziert,
   - internes Speichern (210, 310), durch den ersten sicheren Chip, von Informationen, die sich auf diese Erzeugung von Token beziehen, um die Erzeugung eines beliebigen anderen Tokens für diese zweite Reihe geschützter Daten durch den ersten sicheren Chip zu verbieten,
   - Übertragen (225, 320), durch den ersten sicheren Chip, des erzeugten Tokens an den Fabrikserver,
   - Übertragen (235, 330), durch den Fabrikserver, des erzeugten Tokens an den zweiten sicheren Chip zusammen mit der zweiten Reihe geschützter Daten,
   - Bestimmen (240, 335), durch den zweiten sicheren Chip, dass das Token durch den ersten sicheren Chip ausgegeben wurde, und
   - nur wenn der zweite sichere Chip bestimmt, dass das Token durch den ersten sicheren Chip ausgegeben wurde, Speichern (240, 335), durch den zweiten sicheren Chip, der zweiten Reihe geschützter Daten.

2. Verfahren nach Anspruch 1, das ferner ein Speichern einer Sequenz von Reihen geschützter Daten im Fabrikserver umfasst, wobei der Fabrikserver nacheinander die erste Reihe geschützter Daten an den ersten sicheren Chip und die zweite Reihe geschützter Daten an den zweiten sicheren Chip überträgt, wobei die zweite Reihe geschützter Daten der ersten Reihe geschützter Daten in der Sequenz geschützter Daten folgt.

3. Verfahren nach einem der Ansprüche 1 oder 2, wobei das Verfahren ferner umfasst:

   - Bestimmen, durch den zweiten sicheren Chip, ob die Reihe geschützter Daten, die an den zweiten sicheren Chip übertragen werden, die Reihe geschützter Daten ist, die durch das Token identifiziert werden, und
   - nur wenn die Reihe geschützter Daten, die an den zweiten sicheren Chip übertragen werden, die Reihe geschützter Daten ist, die durch das Token identifiziert werden, Speichern, durch den zweiten sicheren Chip, der zweiten Reihe geschützter Daten.

4. Verfahren nach einem der Ansprüche 1 bis 3, wobei die sicheren Chips zur Gruppe gehören, die umfasst: embedded Universal Integrated Circuit Cards, eUICCs; integrated UICCs, iUICCs; Secure Digital-Karten, SD-Karten; miniSD-Karten; microSD-Karten; Smartcards; integrated Secure Elements, iSE; softwaresichere Elemente; sichere Chips und sichere Enklaven.

**5.** Verfahren nach einem der Ansprüche 1 bis 4, wobei jeder sichere Chip eine eUICC ist, jede Reihe geschützter Daten ein Profil ist, das durch eine eUICC verwendet wird, um dieser eUICC, wenn das Profil aktiviert ist, zu ermöglichen, auf eine spezifische Mobilnetzinfrastruktur zuzugreifen.

**6.** Verfahren nach Anspruch 2 und 5, das ferner umfasst:

- Senden, durch den Fabrikserver, einer ersten Anforderung an die erste eUICC, einschließlich des ersten Profils und eines anfänglichen Tokens, das die erste eUICC identifiziert,
- Übertragen des erzeugten Tokens, das einschließt, dass die Maschine das Token empfängt, und
- nach dem Empfang des Tokens, Senden, durch die Maschine, einer zweiten Anforderung, einschließlich des Tokens und des zweiten Profils, an die zweite eUICC.

**7.** Verfahren nach Anspruch 6, wobei die erste Anforderung die EID (eUICC-ID) der ersten eUICC und das Token, das durch eine SM-DP (Subscription Manager Data Preparation), eine SM-DP+ (Subscription Manager Data Preparation enhanced) oder eine SM-DPf (Subscription Manager Data Preparation factory) erzeugt wird, umfasst und die zweite Anforderung die zweite EID der zweiten eUICC und das Token, das durch die erste eUICC erzeugt wird, umfasst.

**8.** Verfahren nach einem der Ansprüche 5 bis 7, das ferner ein Verketten der Profile Profil_n, die in eUICCs eUICC_n geladen werden sollen, umfasst, wobei die Profile Profil_n in einer Kette von Profilen verkettet sind, die in einen Speicher eines sicheren Servers gespeichert werden, und wobei das erzeugte Token das zweite Profil Profil_n+1 durch Informationen identifiziert, die zur Gruppe gehören, die umfasst:

- einen Integrated Circuit Card Identifier, ICCID, von Profil_n+1;
- einen ICCID eines vorherigen Profils Profil_n, das Profil_n+1 in der Kette von Profilen vorhergeht;
- eine Sequenznummer, die mit Profil_n+1 assoziiert ist, wobei jedes Profil der Kette von Profilen mit einer anderen Sequenznummer assoziiert ist; und
- eine Sequenznummer, die mit Profil_n assoziiert ist, wobei jedes Profil der Kette von Profilen mit einer anderen Sequenznummer assoziiert ist.

**9.** Verfahren nach Anspruch 8, wobei jedes der Profile Profil_n einen kryptografischen Startwert Sn enthält, wobei das Verketten umfasst:

- Identifizieren jedes Profils Profil_n durch seinen ICCID_n,
- Verschlüsseln des ICCID_n mit einem Schlüssel KP(n) unter Verwendung einer Pseudozufallsfunktion (PRF) als kryptografisches Primitiv, wobei der Verschlüsselungsschlüssel eines ICCID_n, KP(n) so ist, dass

$$KP(n+1) = PRF\ (Sn,\ ICCID\_n+1),$$

wobei:

KP(n+1) der Verschlüsselungsschlüssel von Profil Profil _n+1 ist,
Sn der Startwert des Profils Profil_n ist und
ICCID_n+1 der ICCID des Profils Profil _n+1 ist.

**10.** Verfahren nach Anspruch 9, das ferner ein Berechnen eines KCV (Key Check Value) des Schlüssels KP(n+1) durch eUICC _n, wobei der KCV die Verschlüsselung eines bekannten Datenelements mit dem Schlüssel KP(n+1) ist, und Prüfen des KCV durch eUICC_n+1, einschließlich eines Berechnens von KP(n+1), Chiffrierens der bekannten Daten mit dem berechneten Schlüssel Kp(n+1) und Verifizierens, dass das Ergebnis gleich dem empfangenen KCV ist, umfasst.

**11.** Verfahren nach Anspruch 8, wobei jedes der Profile Profil_n einen kryptografischen Startwert Sn enthält, wobei eUICC_n und eUICC_n+1 denselben Verschlüsselungsschlüssel Kb teilen und wobei das Verfahren der Erfindung ferner umfasst:

- Empfangen, durch eUICC_n, von EID_n+1 (eUICC-ID) von eUICC_n+1 mit Profil_n,
- Berechnen, durch eUICC_n, eines Tokens Token_n für eUICC_n+1, so dass
Token_n die Verschlüsselung mit Schlüssel Kb von Sn und EID_n+1 ist, und
- Dechiffrieren von Token_n durch eUICC_n+1, um Sn zu erhalten, und Prüfen von EID_n+1.

12. Verfahren nach Anspruch 8, wobei jedes der Profile Profil_n einen kryptografischen Startwert Sn enthält, wobei eUICC_n und eUICC_n+1 denselben Verschlüsselungsschlüssel Kb teilen und wobei das Verfahren der Erfindung ferner umfasst:

- Empfangen, durch eUICC_n, von EID_n+1 (eUICC-ID) von eUICC_n+1 mit Profil_n,
- Berechnen, durch eUICC_n, eines Tokens Token_n für eUICC_n+1 unter Verwendung einer Pseudozufallsfunktion (PRF) als kryptografisches Primitiv, so dass

$$\texttt{Token\_n = PRF (Kb, EID\_n+1, Sn),}$$

und
- Dechiffrieren von Token_n durch eUICC_n+1, um Sn zu erhalten, und Prüfen von EID _n+1.

13. Verfahren nach einem der Ansprüche 8 bis 12, das ferner umfasst:

- Einschließen von ICCID_n+1 und ICCID_n+2 in Profil_n, wobei Token_n mindestens die Signatur von EID_n+1 und EID_n+2 durch einen privaten Schlüssel PrivaterSchlüssel_n von eUICC_n und Zertifikat_n einschließt, der ein statischer öffentlicher Schlüssel von eUICC_n ist, der durch eine Zertifizierungsstelle CA signiert wird,
- Erkennen, dass eUICC_n+1 Profil _n+1 nicht laden und speichern kann,
- Senden von Token_n an eUICC_n+2 zusammen mit einer Anforderung zur Wiederherstellung Wiederherstellungsanforderung,
- Bestimmen, durch eUICC_n+2, ob Token_n durch eUICC_n ausgegeben wurde und ob EID_n+2 in Token_n an der zweiten Position enthalten ist,
- nur wenn durch eUICC_n+2 bestimmt wird, dass Token_n durch eUICC_n ausgegeben wurde, Berechnen eines Wiederherstellungs-Tokens WiederherstToken_n+2 durch eUICC_n+2, wobei

$$\texttt{WiederherstToken\_n+2} =$$
$$\texttt{Sign(Wiederherstellungsanforderung} |$$
$$\texttt{EID\_n+2)[PrivaterSchlüssel\_n+2] | Zertifikat\_n+2}$$

- Senden von WiederherstToken_n+2 an eUICC_n,
- Bestimmen, durch eUICC_n, ob WiederherstToken_n+2 durch eUICC_n+2 ausgegeben wurde,
- nur wenn durch eUICC_n bestimmt wird, dass WiederherstToken_n+2 durch eUICC_n+2 ausgegeben wurde, Berechnen, durch eUICC_n, eines Tokens für die Wiederherstellung TokenWiederherst_n+2, wobei TokenWiederherst_n+2 mindestens die Signatur von EID_n+2 durch PrivaterSchlüssel_n und Zertifikat_n enthält,
- Bestimmen, durch eUICC_n+2, ob TokenWiederherst_n+2 durch eUICC_n ausgegeben wurde,
- nur wenn durch eUICC_n+2 bestimmt wird, dass TokenWiederherst_n+2 durch eUICC_n ausgegeben wurde, Speichern von Profil _n+2 in eUICC_n+2 und Erzeugen, durch eUICC_n+2, von Token_n+2.

14. Verfahren nach Anspruch 13, wobei:

Token_n = Sign(EID_n+1 | EID_n+2) [PrivaterSchlüssel_n] | ChiffrierK | Zertifikat_n, wobei ChiffrierK = AES_GCM(Kn) [ShS], ShS = ECKA(PrivaterSchlüssel_n, ÖffentlicherSchlüssel_n+1), Kn ein Schlüsselwert von Profil_n ist, der zum Entschlüsseln von Profil _n+1 erforderlich ist,

$$\texttt{WiederherstToken\_n+2} =$$
$$\texttt{Sign(Wiederherstellungsanforderung} |$$
$$\texttt{EID\_n+2)[PrivaterSchlüssel\_n+2] | Zertifikat\_n+2 und}$$

$$\texttt{TokenWiederherst\_n+2} =$$
$$\texttt{Sign(EID\_n+2)[PrivaterSchlüssel\_n] | ChiffrierK+1 |}$$
$$\texttt{Zertifikat\_n, wobei ChiffrierK+1 = AES\_GCM(Kn+1)[ShS],}$$

ShS = ECKA(PrivaterSchlüssel_n, ÖffentlicherSchlüssel_n+2), Kn+1 ein Schlüsselwert von Profil_n ist, der zum Entschlüsseln von Profil _n+2 erforderlich ist.

**15.** Verfahren nach Anspruch 13, wobei:

Token_n = Sign(EID_n+1 | EID_n+2 | Xn) [PrivaterSchlüssel_n] | Zertifikat_n, wobei Xn ein Zufallswert von Profil_n ist,

```
WiederherstToken_n+2                                    =
Sign(Wiederherstellungsanforderung                     |
EID_n+2)[PrivaterSchlüssel_n+2] | Zertifikat_n+2 und
```

TokenWiederherst_n+2 = Sign(EID_n+2 | Xn+1) [PrivaterSchlüssel_n] | Zertifikat_n, Xn+1 ein Zufallswert von Profil_n ist.

**16.** Verfahren nach Anspruch 13, wobei:

Token_n = Sign(EID_n+1 | EID_n+2 | Nbn) [PrivaterSchlüssel_n] | Zertifikat_n, Nbn, auf das Profil Profil_n in der Kette von Profilen zeigt,

```
WiederherstToken_n+2                                    =
Sign(Wiederherstellungsanforderung                     |
EID_n+2)[PrivaterSchlüssel_n+2] | Zertifikat_n+2 und
```

TokenWiederherst_n+2 = Sign(EID_n+2 | Nbn+1) [PrivaterSchlüssel_n] | Zertifikat_n, Nbn+1 auf das Profil Profil _n+1 in der Kette von Profilen zeigt.

**17.** Verfahren nach einem der Ansprüche 13 bis 16, wobei eUICC_n+2 in seinem Speicher speichert, dass eUICC_n+1 nicht richtig funktioniert, und jegliches Token von eUICC_n+1 zurückweist.

**18.** Verfahren nach einem der Ansprüche 13 bis 17, wobei eUICC_n in seinem Speicher speichert, dass eUICC_n+1 nicht richtig funktioniert, und jegliche weitere Anforderung für ein Wiederherstellungs-Token zurückweist.

**Revendications**

**1.** Procédé (200, 300) pour stocker des séries de données protégées dans des puces sécurisées (130) dans un environnement non sécurisé, caractérisé dans qu'il comprend :

- le chargement (205, 305, 310), par une première puce sécurisée, d'une première série de données protégées depuis un serveur d'usine, la première série de données protégées comprenant un identifiant d'une seconde série de données protégées,
- la génération (220, 315), par la première puce sécurisée, d'un jeton pour permettre à une seconde puce sécurisée de charger la seconde série de données protégées, le jeton identifiant la seconde série de données protégées,
- le stockage interne (210, 310), par la première puce sécurisée, d'informations connexes à cette génération de jeton pour interdire la génération de tout autre jeton pour cette seconde série de données protégées par la première puce sécurisée,
- la transmission (225, 320), par la première puce sécurisée, du jeton généré au serveur d'usine,
- la transmission (235, 330), par le serveur d'usine, du jeton généré à la seconde puce sécurisée conjointement avec la seconde série de données protégées,
- la détermination (240, 335), par la seconde puce sécurisée, que le jeton a été émis par la première puce sécurisée, et
- seulement si la seconde puce sécurisée détermine que le jeton a été émis par la première puce sécurisée, le stockage (240, 335), par la seconde puce sécurisée, de la seconde série de données protégées.

**2.** Procédé selon la revendication 1, qui comprend en outre le stockage d'une séquence de séries de données protégées dans le serveur d'usine, ledit serveur d'usine transmettant successivement la première série de données protégées à la première puce sécurisée et la seconde série de données protégées à la seconde puce sécurisée, la seconde série de données protégées suivant la première série de données protégées dans la séquence de séries de données protégées.

**3.** Procédé selon l'une quelconque des revendications 1 ou 2, le procédé comprenant en outre :

- la détermination, par la seconde puce sécurisée, du fait que la série de données protégées transmise à la seconde puce sécurisée est ou non la série de données protégées identifiée par le jeton, et
- seulement si la série de données protégées transmise à la seconde puce sécurisée est la série de données protégées identifiée par le jeton, le stockage, par la seconde puce sécurisée, de la seconde série de données protégées.

**4.** Procédé selon l'une quelconque des revendications 1 à 3, dans lequel les puces sécurisées appartiennent au groupe comprenant : des cartes de circuit intégré universelles, « Universal Integrated Circuit Cards » eUICCs, incorporées ; des UICCs intégrées, « integrated UICCs » iUICCs ; des cartes de mémoire flash, « Secure Digital » SD, ; des cartes miniSD ; des cartes microSD ; des cartes intelligentes ; des éléments sécurisés intégrés, « integrated Secure Elements » iSE ; des éléments sécurisés logiciels ; des puces sécurisées, et des enclaves sécurisées.

**5.** Procédé selon l'une quelconque des revendications 1 à 4, dans lequel chaque puce sécurisée est une eUICC, chaque série de données protégées est un profil utilisé par une eUICC pour permettre à cette eUICC, lorsque le profil est activé, d'accéder à une infrastructure de réseau mobile spécifique.

**6.** Procédé selon la revendication 2 et 5, qui comprend en outre :

- l'envoi, par le serveur d'usine, d'une première demande à la première eUICC, incluant le premier profil et un jeton initial identifiant la première eUICC,
- la transmission du jeton généré inclut la réception, par ladite machine, dudit jeton, et
- après la réception dudit jeton, l'envoi, par ladite machine, d'une seconde demande à la seconde eUICC, incluant ledit jeton et le second profil.

**7.** Procédé selon la revendication 6, dans lequel le première demande comprend l'EID (eUICC-ID) de la première eUICC, et le jeton généré par une SM-DP (« Subscription Manager Data Preparation »), une SM-DP+ (« Subscription Manager Data Preparation enhanced ») ou une SM-DPf (« Subscription Manager Data Preparation factory ») et la seconde demande comprend le second EID de la seconde eUICC et le jeton généré par la première eUICC.

**8.** Procédé selon l'une quelconque des revendications 5 à 7, qui comprend en outre le chaînage des profils Profile_n devant être chargés dans des eUICCs eUICC_n, dans lequel les profils Profile_n sont chaînés en une chaîne de profils stockés dans une mémoire d'un serveur sécurisé, et dans lequel le jeton généré identifie le second profil Profile_n+1 par le biais d'informations appartenant au groupe comprenant :

- un identifiant de carte de circuit intégré, « Integrated Circuit Card identifier » ICCID, de Profile_n+1 ;
- un ICCID d'un profil précédent Profile_n précédant Profile_n+1 dans ladite chaîne de profils ;
- un numéro de séquence associé à Profile_n+1, chaque profil de la chaîne de profils étant associé à un numéro de séquence différent ; et
- un numéro de séquence associé à Profile_n, chaque profil de la chaîne de profils étant associé à un numéro de séquence différent.

**9.** Procédé selon la revendication 8, dans lequel chacun desdits profils Profile_n contient une valeur initiale cryptographique Sn, ledit chaînage comprenant :

- l'identification de chaque profil Profile_n par son ICCID_n,
- le cryptage du ICCID_n avec une clef KP(n), en utilisant une fonction pseudo-aléatoire « Pseudo-Random Function » (PRF) en tant que primitive cryptographique, dans lequel la clef de cryptage d'un ICCID_n, KP(n) est telle que KP(n+1) = PRF (Sn, ICCID_n+1), où :

KP(n+1) est la clef de cryptage de profil Profile_n+1,

Sn est la valeur initiale du profil Profile_n, et

ICCID_n+1 est le ICCID du profil Profile_n+1.

10. Procédé selon la revendication 9, qui comprend en outre le calcul d'une KCV (« Key Check Value ») de la clef KP(n+1), par eUICC_n, la KVC étant le cryptage de données connues avec la clef KP(n+1), et le contrôle de la KVC, par eUICC_n+1, incluant la computation de KP(n+1), le chiffrement des données connues avec la clef computée KP(n+1), et la vérification que le résultat est égal à la KCV reçue.

11. Procédé selon la revendication 8, dans lequel chacun desdits profils Profile_n contient une valeur initiale cryptographique Sn, eUICC_n et eUICC_n+1 partageant la même clef de cryptage Kb, et dans lequel le procédé de l'invention comprend en outre :

- la réception, par eUICC_n, de EID_n+1 (eUICC-ID) de eUICC_n+1 avec Profile_n,
- la computation, par eUICC_n, d'un jeton Token_n pour eUICC_n+1, de manière telle que Token_n est le cryptage, avec la clef Kb de Sn et EID_n+1, et
- le déchiffrement de Token_n, par eUICC_n+1, pour obtenir Sn et le contrôle de EID _n+1.

12. Procédé selon la revendication 8, dans lequel chacun desdits profils Profile_n contient une valeur initiale cryptographique Sn, eUICC_n et eUICC_n+1 partageant la même clef de cryptage Kb, et dans lequel le procédé de l'invention comprend en outre :

- la réception, par eUICC_n, de EID_n+1 (eUICC-ID) de eUICC_n+1 avec Profile_n,
- la computation, par eUICC_n, d'un jeton Token_n pour eUICC_n+1, en utilisant une fonction pseudo-aléatoire (PRF) en tant que primitive cryptographique, de manière telle que

$$\text{Token\_n = PRF (Kb, EID\_n+1, Sn),}$$

et
- le déchiffrement de Token_n, par eUICC_n+1, pour obtenir Sn et le contrôle de EID _n+1.

13. Procédé selon l'une quelconque des revendications 8 à 12, qui comprend en outre :

- l'inclusion de ICCID_n+1 et de ICCID_n+2 dans Profile_n, dans lequel Token_n inclut au moins la signature de EID_n+1 et de EID_n+2 par une clef privée PrivateKey_n de eUICC_n et Certificate_n, qui est une clef publique statique de eUICC_n signée par une autorité de certification, « Certification Authority » CA,
- la détection que eUICC_n+1 est incapable de charger et de stocker Profile_n+1,
- l'envoi de Token_n à eUICC_n+2 conjointement avec une demande de récupération « Recovery Request »,
- la détermination, par eUICC_n+2, que Token_n a été émis ou non par eUICC_n, et que EID_n+2 est inclus ou non dans Token_n à la seconde position,
- seulement s'il est déterminé, par eUICC_n+2, que Token_n a été émis par eUICC_n, le calcul d'un jeton de récupération RecovToken_n+2 par eUICC_n+2, dans lequel RecovToken_n+2 = Sign(Recovery Request | EID_n+2) [PrivateKey_n+2] | Certificate_n+2

- l'envoi de RecovToken_n+2 à eUICC_n,
- la détermination, par eUICC_n, du fait que RecovToken_n+2 a été émis ou non par eUICC_n+2,
- seulement s'il est déterminé, par eUICC_n, que RecovToken_n+2 a été émis par eUICC_n+2, le calcul, par eUICC_n, d'un jeton pour récupération TokenRecov_n+2, dans lequel TokenRecov_n+2 inclut au moins la signature de EID_n+2 par PrivateKey_n et Certificate_n,
- la détermination, par eUICC_n+2, du fait que TokenRecov_n+2 a été émis ou non par eUICC_n,
- seulement s'il est déterminé, par eUICC_n+2, que TokenRecov_n+2 a été émis par eUICC_n, le stockage de Profile_n+2 dans eUICC_n+2 et la génération, par eUICC_n+2, de Token_n+2.

14. Procédé selon la revendication 13, dans lequel :

Token_n = Sign (EID_n+1 | EID_n+2) [PrivateKey_n] | CipherK | Certificate_n, où CipherK = AES_GCM(Kn) [ShS], ShS = ECKA(PrivateKey_n, PublicKey_n+1), Kn étant une valeur de clef de Profile_n, nécessaire pour décrypter Profile_n+1, RecovToken_n+2 = Sign(Recovery Request | EID_n+2) [PrivateKey_n+2] | Certificate_n+2, et
TokenRecov_n+2 = Sign(EID_n+2) [PrivateKey_n] | CipherK+1 1 Certificate_n, où CipherK+1 = AES_GCM(Kn+1)[ShS], ShS = ECKA(PrivateKey_n, PublicKey_n+2), Kn+1 étant une valeur de clef de Profile_n, nécessaire pour décrypter Profile_n+2 .

15. Procédé selon la revendication 13, dans lequel :

Token_n = Sign(EID_n+1 | EID_n+2 | Xn) [PrivateKey_n] | Certificate_n, Xn étant une valeur aléatoire provenant de Profile_n, RecovToken_n+2 = Sign(Recovery Request | EID_n+2) [PrivateKey_n+2] | Certificate_n+2, et
TokenRecov_n+2 = Sign(EID_n+2 | Xn+1) [PrivateKey_n] | Certificate_n, Xn+1 étant une valeur aléatoire provenant de Profile_n.

16. Procédé selon la revendication 13, dans lequel :

Token_n = Sign(EID_n+1 | EID_n+2 | Nbn) [PrivateKey_n] | Certificate_n, Nbn indiquant le profil Profile_n dans la chaîne de profils, RecovToken_n+2 = Sign(Recovery Request| EID_n+2) [PrivateKey_n+2] | Certificate_n+2, et
TokenRecov_n+2 = Sign(EID_n+2 | Nbn+1) [PrivateKey_n] | Certificate_n, Nbn+1 indiquant le profil Profile_n+1 dans la chaîne de profils.

17. Procédé de l'une quelconque des revendications 13 à 16, dans lequel eUICC_n+2 stocke dans sa mémoire que eUICC_n+1 est défaillante et rejette tout jeton provenant de eUICC_n+1.

18. Procédé de l'une quelconque des revendications 13 à 17, dans lequel eUICC_n stocke dans sa mémoire que eUICC_n+1 est défaillante et rejette toute demande supplémentaire de jeton de récupération.

Figure 1

Figure 2

Figure 3

400

110                    150                    180                    190

```
┌──────────┐      ┌──────────┐      ┌──────────┐      ┌──────────┐
│ Factory  │      │  eUICC_n │      │eUICC_n+1 │      │eUICC_n+2 │
│  server  │      │          │      │          │      │          │
└──────────┘      └──────────┘      └──────────┘      └──────────┘
```

405

410

415

420

430

425

435

440

445

450

455

Figure 4

500

| 110 | 150 | 180 | 190 |
|---|---|---|---|
| Factory server | eUICC_n | eUICC_n+1 | eUICC_n+2 |

505

510

515

520

525

530

535

540

545

550

555

Figure 5

Figure 6

**EP 4 482 085 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3557895 A1
- EP 2077517 A1